(19) Europäisches Patentamt
European Patent Office
Office européen des brevets

(11) **EP 4 753 132 A1**

(12) **EUROPEAN PATENT APPLICATION**
published in accordance with Art. 153(4) EPC

(43) Date of publication:
**03.06.2026 Bulletin 2026/23**

(21) Application number: **24871363.8**

(22) Date of filing: **20.05.2024**

(51) International Patent Classification (IPC):
**H02M 3/155** (2006.01)    **H02M 7/48** (2007.01)

(52) Cooperative Patent Classification (CPC):
**H02M 3/155; H02M 7/48**

(86) International application number:
**PCT/JP2024/018477**

(87) International publication number:
**WO 2025/069552 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023 JP 2023170178**

(71) Applicants:
• **Daikin Industries, Ltd.
Osaka-shi, Osaka 530-0001 (JP)**
• **The University of Tokyo
Bunkyo-ku, Tokyo 113-8654 (JP)**

(72) Inventors:
• **YAMASHITA, Naoya
Osaka-shi, Osaka 530-0001 (JP)**
• **HIBINO, Hiroshi
Osaka-shi, Osaka 530-0001 (JP)**
• **YASUDA, Yoshiki
Osaka-shi, Osaka 530-0001 (JP)**
• **YAMAGIWA, Akio
Osaka-shi, Osaka 530-0001 (JP)**
• **FUJITA, Toshiyuki
Tokyo 113-8654 (JP)**
• **FUJIMOTO, Hiroshi
Tokyo 113-8654 (JP)**
• **NAGAI, Sakahisa
Tokyo 113-8654 (JP)**

(74) Representative: **Hoffmann Eitle
Patent- und Rechtsanwälte PartmbB
Arabellastraße 30
81925 München (DE)**

(54) **POWER CONVERSION SYSTEM, HEAT PUMP SYSTEM, AND PHOTOVOLTAIC POWER GENERATION SYSTEM**

(57) A power system includes: a DC/DC converter configured to allow connection of a DC power source; a grid-connected inverter; and a DC link configured to connect the DC/DC converter and the grid-connected inverter. Within a half-cycle of an AC-side grid voltage of the grid-connected inverter, a voltage of the DC link is adjusted in accordance with a DC load connectable to the DC link.

FIG.1

EP 4 753 132 A1

**Description**

Technical Field

The present disclosure relates to a power conversion system, a heat pump system, and a photovoltaic power generation system.

Background Art

For example, Patent Literature 1 discloses a power converter configured to convert DC power generated by a power generator into AC power. The power converter includes: a boost converter circuit configured to boost an output voltage of the power generator; an inverter circuit configured to convert an output voltage of the boost converter circuit into AC power and to interconnect the AC power with a power system; a buck converter circuit configured to perform conversion of output power of the boost converter circuit and to supply resultant power to an internal load; and a controller. The controller is configured to control the output voltage of the boost converter circuit to be lower than or equal to a voltage value which is less than the maximum value of AC voltage of the power system, in a case of supplying output power of the power generator to the internal load via the boost converter circuit and the buck converter circuit.

Citation List

Patent Literature

Patent Literature 1: WO2011/099280 A1

Summary of Invention

Technical Problem

A power conversion system that supplies electric power from a DC power source, such as a photovoltaic cell, to a DC load while converting the power into AC via a grid-connected inverter and feeding it back to the power grid is required to supply an appropriate amount of power to the DC load and thereby improve the operating efficiency of the DC load.
An object of the present disclosure is to improve the operating efficiency of a DC load in accordance with the DC load.

Solution to Problem

According to a first aspect of the present disclosure, a power conversion system is provided. The power conversion system includes: a DC/DC converter configured to allow connection of a DC power source; a grid-connected inverter; and a DC link configured to connect the DC/DC converter and the grid-connected inverter. within a half-cycle of a grid voltage on the AC-side of the grid-connected inverter, a voltage of the DC link is adjusted in accordance with a DC load connectable to the DC link. This feature improves the operating efficiency of the DC load.
According to a second aspect of the present disclosure, in the first aspect, the voltage of the DC link may be adjusted in accordance with a state of the DC load connectable to the DC link. This feature enables an appropriate level of voltage to be applied to the DC load.
According to a third aspect of the present disclosure, in the second aspect, the DC link may be configured to allow connection of, as the DC load, a DC load whose output varies depending on the voltage of the DC link. This feature enables the output of the DC load to be maintained at an appropriate level.
According to a fourth aspect of the present disclosure, in the second aspect, the DC link may be configured to allow connection of, as the DC load, a DC load including a power converter, the voltage of the DC link being adjusted in accordance with a power conversion state of the power converter. This feature enables an appropriate level of voltage to be applied to the DC load including a power converter.
According to a fifth aspect of the present disclosure, in the fourth aspect, the DC link may be configured to allow connection of, as the DC load, a DC load including the power converter that drives a rotating electrical machine at variable speed, the voltage of the DC link being adjusted in accordance with an operating state of the rotating electrical machine. This feature enables an appropriate level of voltage to be applied to the DC load including the power converter that drives a rotating electrical machine at variable speed.
According to a sixth aspect of the present disclosure, in any one of the first to fifth aspects, the adjustment of the voltage of the DC link may be performed by control that includes, within a half cycle of the grid voltage, a period during which the voltage is adjusted in accordance with the DC load connectable to the DC link, and a period during which the voltage is adjusted so as to correspond to a voltage based on the grid voltage. This feature helps prevent excessive voltage from being applied to the DC load.

According to a seventh aspect of the present disclosure, in the sixth aspect, the voltage based on the grid voltage may be greater than an absolute value of the grid voltage. This feature ensures that the voltage required by the grid-connected inverter is secured, regardless of fluctuations in the voltage of the DC link.

According to an eighth aspect of the present disclosure, in any one of the first to seventh aspects, the grid-connected inverter may be controlled to perform one of PWM operation, PAM operation, and rectification operation in accordance with the DC load connectable to the DC link. This feature enables an appropriate level of voltage to be applied to the DC load by controlling the grid-connected inverter.

According to a ninth aspect of the present disclosure, in the first aspect, the DC link may be configured to allow connection of the DC load via a switch circuit. This feature helps prevent excessive voltage from being applied to the DC load.

According to a tenth aspect of the present disclosure, in the ninth aspect, a capacitor having a larger capacitance than a capacitor provided in the DC link may be provided on an input side of the DC load and in parallel with the DC load. This feature facilitates control of the voltage of the DC link and the voltage of the DC load.

According to an eleventh aspect of the present disclosure, in the ninth or tenth aspect, the switch circuit may be controlled to be turned on while the voltage of the DC link is within a predetermined voltage range defined in accordance with the DC load. This feature helps prevent excessive voltage from being applied to the DC load.

According to a twelfth aspect of the present disclosure, in any one of the ninth to eleventh aspects, the switch circuit may be controlled to be turned on while the voltage of the DC link is within a predetermined voltage range defined in accordance with an input voltage of the DC load. This feature helps prevent an excessive current from flowing when the switch circuit is turned on.

According to a thirteenth aspect of the present disclosure, in any one of the ninth to twelfth aspects, the DC/DC converter may be configured to connect, via a diode, the DC power source connectable to the DC/DC converter and the DC load connectable to the DC link. This feature reduces losses in the current path when the diode is placed in the ON state.

According to a fourteenth aspect of the present disclosure, a heat pump system is provided. The heat pump system includes: the power conversion system according to any one of the first to thirteenth aspects; and a heat pump device as the DC load. This feature eliminates the need for providing a separate DC/DC converter.

According to a fifteenth aspect of the present disclosure, a photovoltaic power generation system is provided. The photovoltaic power generation system includes: the power conversion system according to any one of the first to thirteenth aspects; and a photovoltaic cell as the DC power source. This feature enables the implementation of a power generation system that interconnects the photovoltaic cell with the power grid while maintaining an appropriate level of voltage applied to the DC load, achieved with a simple circuit configuration.

Brief Description of Drawings

FIG. 1 illustrates an example power conversion system according to a first embodiment.
FIGS. 2A to 2C illustrate a relationship among a DC link voltage and an AC voltage and an AC current of a power grid when a grid-connected inverter is operated in parallel operation with reverse power flow, where FIG. 2A illustrates a case where the DC link voltage is 330 V, FIG. 2B illustrates a case where the DC link voltage is 270 V, and FIG. 2C illustrates a case where adjustment is performed to boost a portion of the DC link voltage that is lower than the AC voltage.
FIG. 3 illustrates a power conversion system including N sets of a DC power source and a DC/DC converter.
FIG. 4 illustrates a power conversion system including M DC loads.
FIG. 5 illustrates a power conversion system including N sets of a DC power source and a DC/DC converter and M DC loads.
FIG 6 illustrates operation modes of the grid-connected inverter.
FIG. 7 illustrates an operation mode for feeding power to a DC load during parallel operation with reverse power flow.

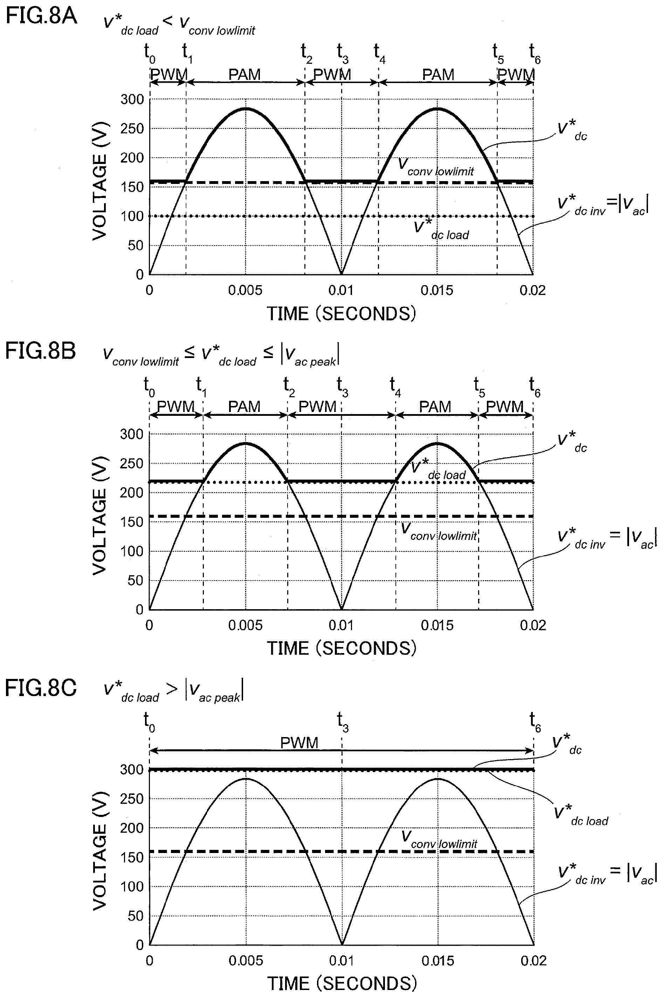

FIGS. 8A to 8C illustrate a DC link voltage target value as a function of the change in a DC load-based DC link voltage target value, where FIG. 8A illustrates a case where the DC load-based DC link voltage target value is smaller than a lower limit value of an output voltage of the DC/DC converter, FIG. 8B illustrates a case where the DC load-based DC link voltage target value is greater than the lower limit value of the output voltage of the DC/DC converter but smaller than an absolute value of a peak voltage of the AC voltage, and FIG. 8C illustrates a case where the DC load-based DC link voltage target value is greater than the absolute value of the peak voltage of the AC voltage.

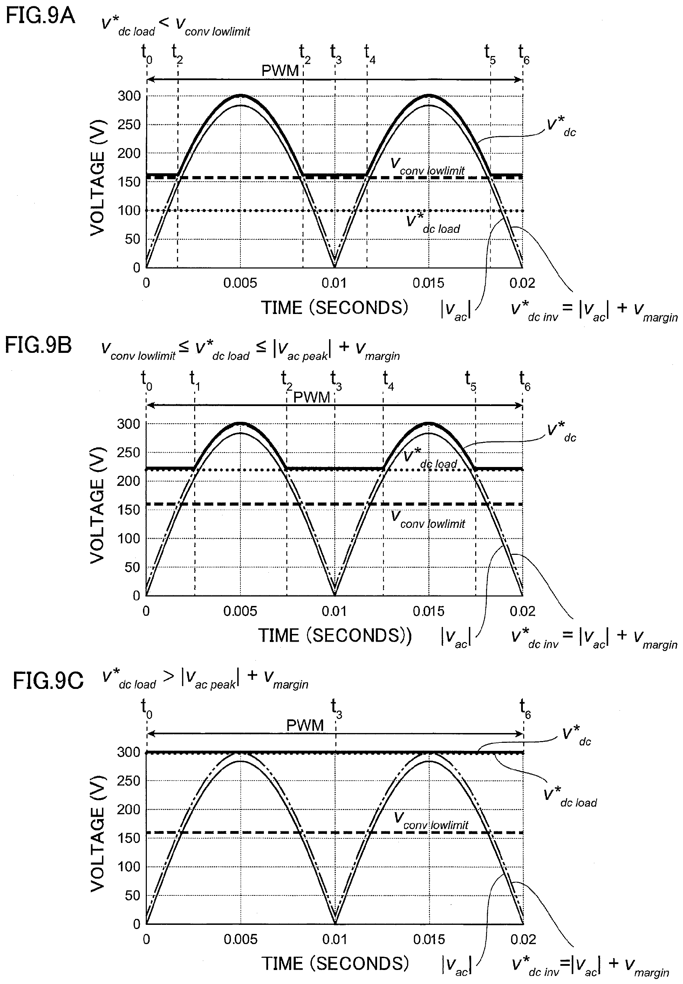

FIGS. 9A to 9C illustrates a change in the DC link voltage target value when a voltage margin is added, where FIG. 9A illustrates a case where the DC load-based DC link voltage target value is smaller than the lower limit value of the output voltage of the DC/DC converter, FIG. 9B illustrates a case where the DC load-based DC link voltage target value is greater than the lower limit value of the output voltage of the DC/DC converter but smaller than a value obtained by adding a voltage margin to the absolute value of the peak AC voltage, and FIG. 9C illustrates a case where the DC load-based DC link voltage target value is greater than the value obtained by adding a voltage margin to the absolute value of the peak voltage of the AC voltage.

FIG. 10 illustrates an operation mode in which no power is fed to the DC load during parallel operation with reverse power flow.

FIG. 11 illustrates a DC link voltage target value in the operation mode in which no power is fed to the DC load during parallel operation with reverse power flow.

FIG. 12 illustrates an operation mode in which power is fed to the DC load from both the DC power source and the power grid during parallel operation with forward power flow.

FIG. 13 illustrates an operation mode in which power is fed to the DC load from the power grid during parallel operation with forward power flow.

FIG. 14 illustrates an operation mode in which power is fed to the DC load from the DC power source during islanding operation.

FIGS. 15A and 15B illustrate the DC link voltage target value in an operation mode in which power is fed to the DC load from the DC power source during islanding operation, where FIG. 15A illustrates a case where the DC load-based DC link voltage target value is greater than the lower limit value of the output voltage of the DC/DC converter, and FIG. 15B illustrates a case where the lower limit value of the output voltage of the DC/DC converter is greater than the DC load-based DC link voltage target value.

FIG. 16 illustrates an example power conversion system according to a second embodiment.

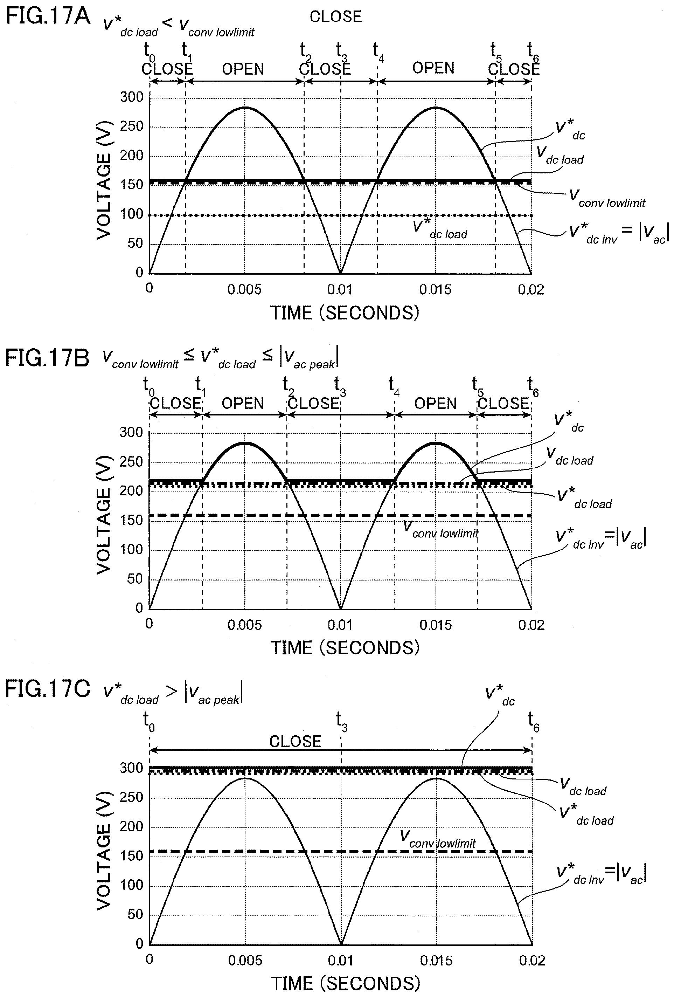

FIGS. 17A to 17C illustrate the DC link voltage target value as a function of the change in the DC load-based DC link voltage target value, where FIG. 17A illustrates a case where the DC load-based DC link voltage target value is smaller than the lower limit value of the output voltage of the DC/DC converter, FIG. 17B illustrates a case where the DC load-based DC link voltage target value is greater than the lower limit value of the output voltage of the DC/DC converter but smaller than the absolute value of the peak AC voltage, and FIG. 17C illustrates a case where the DC load-based DC link voltage target value is greater than the absolute value of the peak voltage of the AC voltage $v_{ac}$.

FIGS. 18A and 18B illustrate means for suppressing an inrush current caused by a load switch, where FIG. 18A illustrates a case where an inrush current occurs, and FIG. 18B illustrates a case where the inrush current is suppressed.

FIG. 19 illustrates an example power conversion system that is a modification of the power conversion system according to the second embodiment.

Description of Embodiments

Exemplary embodiments will be described below with reference to the appended drawings.

[First Embodiment]

(Power Conversion System 1)

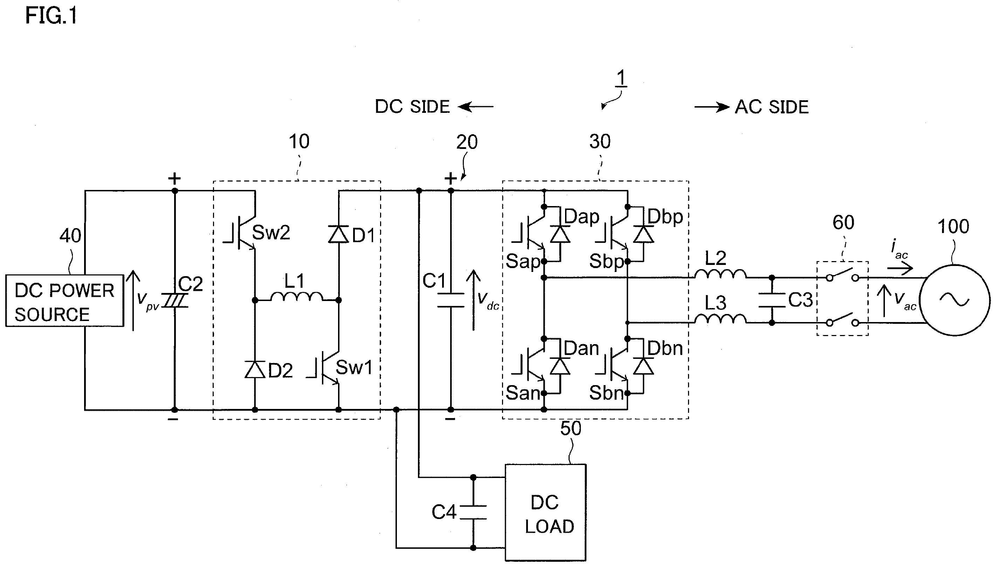

FIG. 1 illustrates an example power conversion system 1 according to a first embodiment.

The power conversion system 1 includes a direct current/direct current converter 10, a direct current link 20, and a grid-connected inverter 30. Hereinafter, the direct current/direct current converter 10 is referred to as a DC/DC converter 10, and the direct current link 20 is referred to as a DC link 20. The DC link 20 connects the DC/DC converter 10 and the grid-connected inverter 30. The DC link 20 is provided between the output side of the DC/DC converter 10 and the input side of the grid-connected inverter 30. A capacitor C1 is provided in the DC link 20. The voltage across the capacitor C1 is the voltage of the DC link 20, which is referred to as a DC link voltage $v_{dc}$.

A direct current power source 40 is connected to the input side of the DC/DC converter 10. Hereinafter, direct current is referred to as DC, and the direct current power source 40 is referred to as a DC power source 40. Here, the DC power source 40 is assumed to be a photovoltaic cell, and the output voltage of the DC power source 40 is referred to as a DC power source voltage $v_{pv}$. The DC/DC converter 10 is configured to allow the DC power source 40 to be connected thereto.

A direct-current load 50 is connected to the DC link 20. Hereinafter, the direct-current load 50 is referred to as a DC load 50. The DC load 50 is supplied with power from the DC link 20. The DC link 20 is configured to allow the DC load 50 to be connected thereto.

A power grid 100 is connected to the output side of the grid-connected inverter 30 via a switch 60. The power grid 100 is a single-phase alternating current power grid. Hereinafter, alternating current is referred to as AC. Hereinafter, the AC voltage, which is the grid voltage of the power grid 100, is referred to as an AC voltage $v_{ac}$ (instantaneous value), the root-mean-square value of the AC voltage is referred to as an AC voltage RMS value $v_{ac\,rms}$, and the absolute value of the peak AC voltage is referred to as an AC peak voltage $|v_{ac\,peak}|$. Between the grid-connected inverter 30 and the switch 60, a reactor L2 is provided on one line and a reactor L3 is provided on the other line. A capacitor C3 is provided between the two lines between the grid-connected inverter 30 and the switch 60. The reactors L2 and L3 and the capacitor C3 function as a filter to remove high-frequency components generated by operation of the grid-connected inverter 30. The capacitor C3 is a non-polarized capacitor, such as a ceramic capacitor or a film capacitor.

With the grid-connected inverter 30 interposed therebetween, the DC link 20 side is referred to as a DC side (direct-current side), and the power grid 100 side is referred to as an AC side (alternating-current side).

The DC/DC converter 10 is a voltage conversion circuit. The DC/DC converter 10 is connected to the DC power source 40. The DC/DC converter 10 receives the DC power source voltage $v_{pv}$ as an input voltage and converts it into a different voltage as an output voltage. The circuit configuration of the DC/DC converter 10 is determined in accordance with factors such as the input voltage, output power, and specifications of the DC/DC converter 10. The DC/DC converter 10 may be configured with various circuit configurations, including a boost circuit that steps up the input voltage to produce an output voltage, a buck circuit that steps down the input voltage to produce an output voltage, or a buck-boost circuit that steps up or steps down the input voltage to produce an output voltage. The boost circuit may also be referred to as a boost chopper circuit, the buck circuit as a buck chopper circuit, and the buck-boost circuit as a buck-boost chopper circuit. The DC/DC converter 10 may have either a unidirectional power flow or a bidirectional power flow. However, when the DC power source 40 is only a storage battery or a capacitor, the DC/DC converter 10, to which the DC power source 40 is connected, is preferably bidirectional. The circuit configuration of the DC/DC converter 10 will be described later.

The grid-connected inverter 30 is a power conversion circuit that exchanges power between the DC link 20 and the power grid 100. The grid-connected inverter 30 performs forward power flow operation, reverse power flow operation, and islanding operation. The forward power flow operation refers to a process in which AC power of the power grid 100 is converted into DC power and supplied to the DC link 20. The reverse power flow operation refers to a process in which DC power of the DC link 20 is converted into AC power and supplied to the power grid 100. The islanding operation refers to a process in which the DC link 20 is disconnected from the power grid 100, allowing the DC link 20 side and the power grid 100 to operate independently. The circuit configuration of the grid-connected inverter 30 will be described later.

The DC power source 40 is a power source that outputs DC power. Examples of the DC power source 40 include the above-described photovoltaic cell, a fuel cell, a DC section of a pulse width modulation (PWM) converter of a power generator, a storage battery, and a capacitor. The voltage and power supplied by the DC power source 40 vary depending on the type and state of the DC power source. The voltage and power supplied by the DC power source 40 also vary depending on the operating condition of the DC power source. The capacitor C2 may be connected in parallel with the DC power source 40. The capacitor C2 suppresses fluctuations in the DC power source voltage $v_{pv}$. The DC power source 40 and the capacitor C2 may be collectively regarded as a DC power source unit. The capacitor C2 may be an electrolytic capacitor, a ceramic capacitor, a film capacitor, or the like. In addition, a storage battery or a capacitor may be connected in parallel with the DC power source 40, either directly or via a charge/discharge control circuit. The storage battery or the capacitor suppresses fluctuations in power of the DC power source. The DC power source 40 and the storage battery or the capacitor may be collectively regarded as a DC power source unit.

The DC load 50 is a load that operates by receiving DC power. A capacitor C4 may be provided in parallel with the DC load 50. The capacitor C4 suppresses fluctuations in the voltage supplied to the DC load 50. The capacitor C4 may be an electrolytic capacitor, a ceramic capacitor, or the like. The DC load 50 and the capacitor C4 may be collectively regarded as a DC load (or a DC load unit). The phrase "operating the DC load 50" may also be expressed as "driving the DC load 50". Alternatively, this state may also be expressed as "the DC load 50 is being supplied with power," or "a voltage is being applied to the DC load 50." Examples of the DC load 50 include heat pump equipment (heat pump systems) used in air conditioners, water heaters, refrigeration equipment, refrigerators, showcases, and the like, ventilation devices, electric vehicle (EV) chargers, heaters, and DC motors. The DC load 50 may include a power converter that drives a rotating electrical machine at variable speed. The DC load 50 may have an output that varies depending on the voltage of the DC link 20, which serves as the input voltage. Examples of such DC loads 50 include heaters and DC motors that do not include a power converter and whose output varies depending on the input voltage. For example, the amount of heat or temperature output by a heater varies depending on the input voltage, and the rotational speed or torque of a DC motor varies depending on the input voltage. Supplying power to the DC load 50 may also be expressed as "feeding power to the DC load 50".

The switch 60 disconnects the AC side from the DC side. When the switch 60 is closed (ON), the AC side and the DC side are connected, allowing the DC side and the AC side to operate in parallel. When the switch 60 is open (OFF), the AC side and the DC side are disconnected, allowing the DC side and the AC side to operate independently. Opening the switch 60 (to the OFF state) ensures that the aforementioned islanding operation is reliably performed. When the power conversion system 1 is operated in parallel (with the grid), the switch 60 is in the closed (ON) state.

As will be described later, the DC link voltage $v_{dc}$ is adjusted within a half cycle of the AC voltage $v_{ac}$. Accordingly, the capacitor C1 is preferably set to have a capacitance that facilitates adjustment of the DC link voltage $v_{dc}$. For example, it is desirable to select a capacitance capable of suppressing noise components, such as ringing, that may be generated by the operation of the DC/DC converter 10 or the grid-connected inverter 30. The capacitor C1 may be a ceramic capacitor, a film capacitor, or the like.

(Circuit Configuration of the DC/DC Converter 10)

The DC/DC converter 10 is a buck-boost converter. The DC/DC converter 10 includes switching elements Sw1 and Sw2, diodes D1 and D2, and a reactor L1. The switching elements Sw1 and Sw2 are, for example, insulated gate bipolar transistors (IGBTs), which are three-terminal elements each including a collector terminal, an emitter terminal, and a control terminal (gate terminal). The diodes D1 and D2 are two-terminal elements each including an anode terminal and a cathode terminal. The series-connected switching element Sw2 and diode D2 are connected in parallel with the DC power source 40. The switching element Sw2 is connected at its collector terminal to the positive side of the DC power source 40, and at its emitter terminal to the cathode terminal of the diode D2. The diode D2 is connected at its anode terminal to the negative side of the DC power source 40.

The series-connected diode D1 and switching element Sw1 are connected in parallel with the DC link 20. The switching element Sw1 is connected at its emitter terminal to the negative side of the DC link 20, and at its collector terminal to the anode terminal of the diode D1. The diode D1 is connected at its cathode terminal to the positive side of the DC link 20. The reactor L1 is connected between the connection point at which the switching element Sw2 and the diode D2 are connected (i.e., the connection point between the emitter terminal of the switching element Sw2 and the cathode terminal of the diode D2) and the connection point at which the diode D1 and the switching element Sw1 are connected (i.e., the connection point between the anode terminal of the diode D1 and the collector terminal of the switching element Sw1). The diode D2 is connected at its anode terminal to the emitter terminal of the switching element Sw1. Note that terminals need not be directly connected to each other; they may be connected via wiring or the like. The switching elements Sw1 and Sw2 may be implemented by devices other than IGBTs, such as MOSFETs.

The ON and OFF states of the switching elements Sw1 and Sw2 are controlled by control signals supplied to the control terminals of the switching elements Sw1 and Sw2. Depending on the combination of the ON and OFF states of the switching elements Sw1 and Sw2, the DC/DC converter 10 functions as a boost circuit or a buck circuit. The DC/DC converter 10 functions as a boost circuit by keeping the switching element Sw2 in the ON state and applying PWM control to the switching element Sw1. The DC/DC converter 10 functions as a buck circuit by keeping the switching element Sw1 in the OFF state and applying PWM control to the switching element Sw2.

(Grid-Connected Inverter 30)

The grid-connected inverter 30 includes switching elements Sap, San, Sbp, and Sbn, and diodes Dap, Dan, Dbp, and Dbn. The switching elements Sap, San, Sbp, and Sbn are similar to the switching elements Sw1 and Sw2 described above. The diodes Dap, Dan, Dbp, and Dbn are similar to the diodes D1 and D2 described above.

The series-connected switching elements Sap and San and the series-connected switching elements Sbp and Sbn are connected in parallel with the DC link 20. The switching element Sap is connected at its collector terminal to the positive side of the DC link 20, and at its emitter terminal to the collector terminal of the switching element San. The emitter terminal of the switching element San is connected to the negative side of the DC link 20. Similarly, the switching element Sbp is connected at its collector terminal to the positive side of the DC link 20, and at its emitter terminal to the collector terminal of the switching element Sbn. The emitter terminal of the switching element Sbn is connected to the negative side of the DC link 20. The diodes Dap, Dan, Dbp, and Dbn are so-called freewheeling diodes. The diodes Dap, Dan, Dbp, and Dbn are connected in anti-parallel with the switching elements Sap, San, Sbp, and Sbn having the same reference signs, respectively.

The connection point between the emitter terminal of the switching element Sap and the collector terminal of the switching element San is connected to one line of the power grid 100 via the reactor L2 and the switch 60. The connection point between the emitter terminal of the switching element Sbp and the collector terminal of the switching element Sbn is connected to the other line of the power grid 100 via the reactor L3 and the switch 60.

The ON and OFF states of the switching elements Sap, San, Sbp, and Sbn are controlled by control signals supplied to the control terminals of the switching elements Sap, San, Sbp, and Sbn. During forward power flow operation, the switching elements Sap, San, Sbp, and Sbn are controlled such that power is supplied from the power grid 100 to the DC link 20. During reverse power flow operation, the switching elements Sap, San, Sbp, and Sbn are controlled such that power is supplied from the DC link 20 to the power grid 100. During islanding operation, in which the switch 60 is open, the switching elements Sap, San, Sbp, and Sbn are all controlled to be OFF.

Control in the power conversion system 1 will now be described.

As shown in FIG. 1, the DC load 50 is connected to the DC link 20 and is fed with power from the DC link 20. The voltage applied to the DC load 50 is the DC link voltage $v_{dc}$. The DC link voltage $v_{dc}$ is required to be a voltage at which the operation of the DC load 50 can be appropriately maintained. The DC load 50 may be fed with power from the DC power source 40, may be fed with power from the power grid 100 via the grid-connected inverter 30, or may be fed with power from both the DC power source 40 and the power grid 100. In any case, the DC link voltage $v_{dc}$ is adjusted such that operation of the DC load 50 can be appropriately maintained. The DC link voltage $v_{dc}$ is adjusted in accordance with the DC load 50, which is connectable to the DC link 20. To further illustrate, the DC link voltage $v_{dc}$ is adjusted in accordance with the DC load 50 connected to the DC link 20.

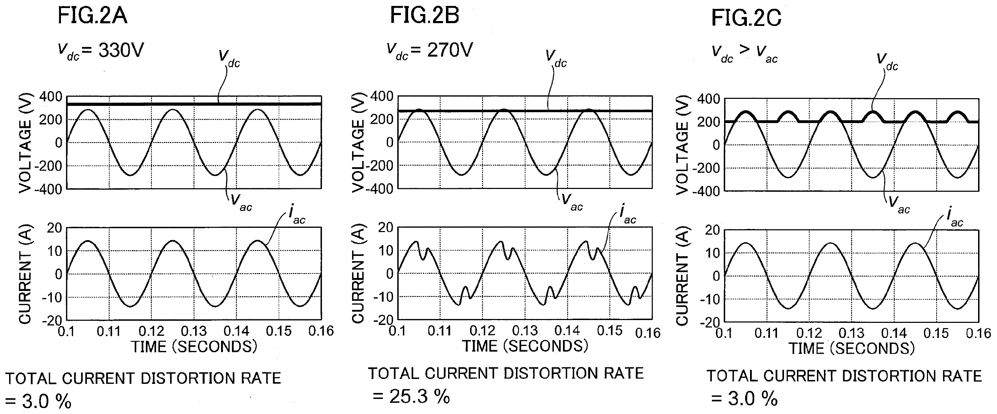

FIGS. 2A to 2C illustrate a relationship among the DC link voltage $V_{dc}$ and the AC voltage $V_{ac}$ and an AC current $i_{ac}$ of the power grid 100 when the grid-connected inverter 30 is operated in parallel operation with reverse power flow. Here, the AC voltage RMS value $v_{ac\,rms}$ is assumed to be 200 V. FIG. 2A illustrates a case where the DC link voltage $V_{dc}$ is 330 V, FIG. 2B illustrates a case where the DC link voltage $V_{dc}$ is 270 V, and FIG. 2C illustrates a case where adjustment is performed to boost a portion of the DC link voltage $V_{dc}$ that is lower than the AC voltage $V_{ac}$. In FIGS. 2A to 2C, the DC link voltage $v_{dc}$ and the AC voltage $v_{ac}$ are shown in the upper graph, while the AC current $i_{ac}$ is shown in the lower graph. The horizontal axis represents time (seconds). The vertical axis represents voltage (V) for the DC link voltage $v_{dc}$ and the AC voltage $v_{ac}$ in the upper graph and current (A) for the AC current $i_{ac}$ in the lower graph. FIGS. 2A to 2C show a total current distortion rate (%) of the AC current $i_{ac}$. The graphs of FIGS. 2A to 2C are obtained by simulation.

When the AC voltage RMS value $v_{ac}$ rms is 200 V, the AC peak voltage $|v_{ac\,peak}|$ is approximately 283 V.

The DC link voltage $v_{dc}$ of 330 V shown in FIG. 2A exceeds the AC peak voltage $|v_{ac\,peak}|$ of approximately 283 V. In this case, the total current distortion rate of the AC current $i_{ac}$ is as low as 3.0%, thereby suppressing the occurrence of distortion in the AC current $i_{ac}$.

The DC link voltage $v_{dc}$ of 270 V shown in FIG. 2B is less than the AC peak voltage $|v_{ac\,peak}|$ of approximately 283 V. In this case, near the peak voltage $v_{ac\,peak}$ of the AC voltage $v_{ac}$, the AC current $i_{ac}$ includes high-frequency current components and is distorted. The total current distortion rate is as high as 25.3%.

As shown in FIG. 2B, distortion in the AC current $i_{ac}$ occurs near the AC peak voltage $|v_{ac\,peak}|$. Thus, as shown in FIG. 2C, the DC link voltage $v_{dc}$ is boosted in its portion lower than the AC voltage $v_{ac}$ to suppress high-frequency current components of the AC current $i_{ac}$. This reduces the total current distortion rate to as low as 3.0%, which is the same as that in FIG. 2A. Changing (or varying) the DC link voltage $v_{dc}$ within a half cycle of the AC voltage as shown in FIG. 2C is expressed as "adjusting the DC link voltage $v_{dc}$." As shown in FIG. 2C, adjusting the DC link voltage $v_{dc}$ lowers the DC link voltage $v_{dc}$ and thus reduces losses, compared to setting the DC link voltage $v_{dc}$ to 330 V as shown in FIG. 2A.

In FIGS. 2A, 2B, and 2C, the voltage applied to the DC load 50, which is fed with power from the DC link 20, is not described. For example, when the DC link voltage $v_{dc}$ is set to 330 V as shown in FIG. 2A, an excessive voltage may be applied to the DC load 50. On the other hand, assuming that the DC link voltage $v_{dc}$ of 270 V shown in FIG. 2B is a suitable voltage for feeding power to the DC load 50, distortion occurs in the AC current $i_{ac}$ as described above. Therefore, as shown in FIG. 2C, adjustment is performed to boost a portion of the DC link voltage $v_{dc}$ that is lower than the AC voltage $v_{ac}$. This shortens the period during which an excessive voltage is applied to the DC load 50 and also suppresses the occurrence of distortion in the AC current $i_{ac}$. Hereinafter, the voltage applied to the DC load 50 is referred to as a DC load voltage $v_{dc\,load}$.

When the power conversion system 1 is operated in parallel operation with reverse power flow, the DC link voltage $v_{dc}$ corresponds to the output voltage of the DC/DC converter 10. The DC link voltage $v_{dc}$ is controlled by the DC/DC converter 10. The DC link voltage $v_{dc}$ may be controlled by the output voltage of the DC/DC converter 10, or may be controlled by the output current (or output power) from the DC/DC converter 10. The mode in which the DC link voltage $v_{dc}$ is controlled by the output voltage of the DC/DC converter 10 is referred to as an output voltage-based control mode. The mode in which the DC link voltage $v_{dc}$ is controlled by the output current (or output power) from the DC/DC converter 10 is referred to as an output current-based control mode (or output power-based control mode).

Control in the power conversion system 1 will be described in detail below.

(Output Voltage-Based Control Mode)

In the output voltage-based control mode, the DC link voltage $v_{dc}$ is controlled in accordance with Equation (1).
[Math. 1]

$$
\begin{aligned}
v_{dc}^{*} &= \max\left(v_{dc\,load}^{*}, v_{dc\,inv}^{*}, v_{conv\,lowlimit}\right) \\
&= \begin{cases}
v_{dc\,load}^{*} & \left(v_{dc\,load}^{*} \geq v_{dc\,inv}^{*} \text{ and } v_{dc\,load}^{*} \geq v_{conv\,lowlimit}\right) \\
v_{dc\,inv}^{*} & \left(v_{dc\,inv}^{*} \geq v_{dc\,load}^{*} \text{ and } v_{dc\,inv}^{*} \geq v_{conv\,lowlimit}\right) \\
v_{conv\,lowlimit} & \left(v_{conv\,lowlimit} \geq v_{dc\,load}^{*} \text{ and } v_{conv\,lowlimit} \geq v_{dc\,inv}^{*}\right)
\end{cases}
\end{aligned} \tag{1}
$$

where

$v^*_{dc}$: DC link voltage (DC/DC converter output voltage) target value
$v^*_{dc\,load}$: DC link voltage target value based on the DC load
$v^*_{dc\,inv}$: DC link voltage target value based on the grid-connected inverter
$v_{conv\,lowlimit}$: lower limit value of the DC/DC converter output voltage

The DC link voltage target value $v^*_{dc}$ is a target value for control of the DC link voltage $v_{dc}$. The DC link voltage $v_{dc}$ is controlled to approach the DC link voltage target value $v^*_{dc}$. The DC link voltage target value $v^*_{dc}$ varies with a period that is (sufficiently) shorter than a half cycle of the AC voltage (grid voltage) on the AC side of the grid-connected inverter 30. The DC link voltage $v_{dc}$ may be the DC link voltage target value $v^*_{dc}$.

The DC link voltage target value $v^*_{dc}$ is set to a maximum value among a DC link voltage target value based on the DC load 50 ($v^*_{dcload}$), a DC link voltage target value based on the grid-connected inverter 30 ($v^*_{dcinv}$), and a lower limit value of the output voltage of the DC/DC converter 10 ($v_{conv\,lowlimit}$). Hereinafter, these terms may be referred to using only the respective reference signs. The same applies to other cases. The DC link voltage target value $v^*_{dc\,inv}$ based on the grid-connected inverter 30 is a voltage determined by the grid voltage.

The target value $v^*_{dc\,load}$ is determined in accordance with the configuration and state of the DC load 50. For example, $v^*_{dc\,load}$ may be determined so as to reduce losses of the DC load 50 in accordance with the state of the DC load 50. When the DC load 50 includes a power converter, $v^*_{dcload}$ may be determined in accordance with the power conversion state of the power converter. For example, $v^*_{dc\,load}$ may be determined in accordance with the power conversion state of the power converter, such as the duty ratio, modulation index, voltage utilization factor, output power, and output current. This enables an appropriate level of voltage to be applied to DC load 50 including a power converter.

When the DC load 50 includes a power converter that drives a rotating electrical machine at variable speed, $v^*_{dc\,load}$ may be determined in accordance with the operating state of the rotating electrical machine. For example, $v^*_{dc\,load}$ may be determined so as to be substantially proportional to the rotational speed of the rotating electrical machine. This enables an appropriate level of voltage to be applied to the DC load 50 including a power converter that drives a rotating electrical machine at variable speed.

When the DC load 50 includes a storage battery, such as an EV battery, $v^*_{dcload}$ may be determined in accordance with factors such as the type of the storage battery, the state of the storage battery (e.g., state of charge (SOC) and state of health (SOH)), and the charging time. When the DC load 50 is a load whose output varies with voltage, such as a heater or a DC motor, $v^*_{dc\,load}$ may be determined in accordance with the output.

The target value $v^*_{dc\,inv}$ is determined in accordance with the instantaneous value of the AC voltage $v_{ac}$ of the grid connected to the grid-connected inverter 30, and the operating state of the grid-connected inverter 30. For example, when the grid-connected inverter 30 is in parallel operation, the absolute value $|v_{ac}|$ of the AC voltage $v_{ac}$ may be determined as $v^*_{dc\,inv}$. When the grid-connected inverter 30 is in parallel operation with reverse power flow, a value obtained by adding a voltage margin $v_{margin}$ to the absolute value $|v_{ac}|$ of the grid voltage $v_{ac}$ (i.e., $|v_{ac}| + v_{margin}$) may be determined as $v^*_{dc\,inv}$. The value of $v_{margin}$ may be determined in accordance with the operating state of the DC load 50. The value of $v_{margin}$ for an operating state with large fluctuations in power consumption may be determined to be greater than the value of $v_{margin}$ for an operating state with small fluctuations in power consumption. More specifically, for the DC load 50 including a power converter that drives a rotating electrical machine at variable speed, the value of $v_{margin}$ during startup, acceleration, or deceleration of the rotating electrical machine may be determined to be greater than the value of $v_{margin}$ during constant-speed operation of the rotating electrical machine or when it is at rest (when the power converter is stopped).

The target value $v_{conv\,lowlimit}$ is determined by the configuration of the DC/DC converter 10. For example, when the DC/DC converter 10 is a boost circuit, $v_{convlowlimit}$ corresponds to the input voltage of the boost circuit. When the DC/DC converter 10 is a buck circuit, $v_{conv\,lowlimit}$ is, in principle, 0 V.

As shown in Equation (1), the DC link voltage target value $v^*_{dc}$ is set to a maximum value among the DC link voltage target value based on the DC load 50 ($v^*_{dc\,load}$), the DC link voltage target value based on the grid-connected inverter 30 ($v^*_{dc\,inv}$), and the lower limit value of the output voltage of the DC/DC converter 10 ($v_{conv\,lowlimit}$). The DC link voltage $v_{dc}$ (the DC link voltage target value $v^*_{dc}$) is set based on the DC link voltage target value $v^*_{dc\,load}$ based on the DC load 50. In other words, the DC link voltage $v_{dc}$ is adjusted in accordance with the DC load 50. As described above, the DC link voltage target value $v^*_{dc\,load}$ based on the DC load 50 is determined in accordance with the state of the DC load 50. Accordingly, the DC link voltage $v_{dc}$ (the DC link voltage target value $v^*_{dc}$) may be adjusted in accordance with the state of the DC load 50.

If $v_{dc}$ is less than $v^*_{dc\,load}$, an appropriate voltage will not be applied to the DC load 50. If $v_{dc}$ is less than $v^*_{dc\,inv}$, distortion will occur in the AC current $i_{ac}$, as described above. Since $v_{dc}$ is the output voltage of the DC/DC converter 10, it cannot be set below $v_{conv\,lowlimit}$.

When $v_{conv\,lowlimit}$ is smaller than both $v^*_{dc\,load}$ and $v^*_{dc\,inv}$ ($v^*_{dc\,load}, v^*_{dc\,inv} > v_{conv\,lowlimit}$), and when the condition that $v^*_{dc\,load}$ is always greater than $v^*_{dc\,inv}$ ($v^*_{dc\,load} \geq v^*_{dc\,inv}$) holds within a half cycle of the AC voltage, then $v^*_{dc}$ is set to

$v^*_{dc\,load}$ ($v^*_{dc} = v^*_{dc\,load}$). Under conditions where there exists a period in which $v^*_{dc\,inv}$ becomes greater than $v^*_{dc\,load}$ ($v^*_{dc\,inv} > v^*_{dc\,load}$), $v^*_{dc}$ is adjusted so as to periodically vary within a half cycle of the AC voltage.

Adjusting $v^*_{dc}$ under the condition shown in Equation (1) enables operation of the DC load 50 at a voltage matched to the DC load 50 while enabling reverse power flow of power from the DC power source 40 to the power grid 100. Adjusting $v^*_{dc}$ enables a suitable operating voltage (appropriate voltage) to be applied to the DC load 50. Patent Literature 1 discloses providing a boost converter circuit configured to boost an output voltage of a power generator and a buck converter circuit configured to perform conversion of output power of the boost converter circuit and to supply resultant power to an internal load. The power conversion system 1 shown in FIG. 1 achieves a simpler circuit configuration by integrating the boost converter circuit and the buck converter circuit disclosed in Patent Literature 1 into a single common circuit. Furthermore, since the power conversion system 1 does not include the buck converter circuit for supplying power to the internal load as disclosed in Patent Literature 1, power losses that may otherwise be incurred by a converter for adjusting the voltage applied to the DC load 50 can be eliminated.

(Output Current-Based Control Mode (Output Power-Based Control Mode))

The DC/DC converter 10 is configured to operate based on a detected value or an estimated value of the input voltage and the output voltage target value $v^*_{dc}$. Alternatively, the DC/DC converter 10 may be configured to operate in accordance with a value corresponding to the output current, in addition to these values. The value corresponding to the output current of the DC/DC converter 10 may be determined based on a value corresponding to the current (or power) flowing to the DC load 50, or a value corresponding to the current (or power) flowing to the grid-connected inverter 30. These values may be detected values detected by sensors or similar means, estimated values, or target values. By configuring the DC/DC converter 10 to operate in accordance with a value corresponding to its output current, fluctuations in the output voltage $v_{dc}$ due to current variations can be suppressed. Note that the detected value refers to a value that is actually measured, and the estimated value refers to a value estimated based on the configuration of the DC/DC converter 10. The target value refers to a value that the DC/DC converter 10 is intended to approach when operated.

In the output current-based control mode (output power-based control mode), an output current $i_{conv}$ (or output power $P_{conv}$) of the DC/DC converter 10 is controlled to reach a target value $i^*_{cony}$ (or $P^*_{conv}$). The target value $i^*_{cony}$ (or $P^*_{conv}$) is determined in accordance with the operating state of one or more of the DC power source 40, the DC load 50, and the grid-connected inverter 30. For example, when the DC power source 40 is a photovoltaic cell, an output current from the photovoltaic cell during maximum power point tracking (MPPT) control may be set as $i^*_{conv}$. Controlling the DC/DC converter 10 in the output current-based control mode (output power-based control mode) helps prevent a shortage of the current (power) required for operating the DC load 50. Controlling the DC/DC converter 10 in the output current-based control mode (output power-based control mode) helps prevent a shortage of current (power) supplied from the DC side to the AC side of the grid-connected inverter 30.

(Power Conversion System 1A of First Modification)

As a first modification of the power conversion system 1, a power conversion system 1A including multiple sets of the DC power source 40 and the DC/DC converter 10 will be described.

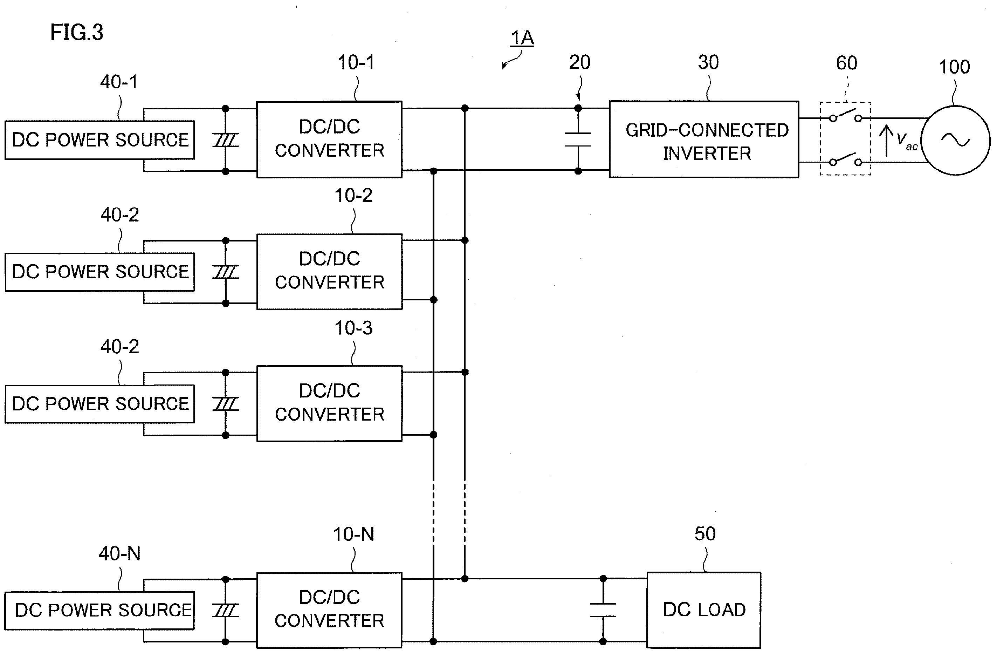

FIG. 3 illustrates the power conversion system 1A including N sets of the DC power source 40 and the DC/DC converter 10, where N is an integer greater than or equal to two. The N DC/DC converters 10 may be individually denoted as DC/DC converters 10-1 to 10-N when the distinction is necessary. The N DC power sources 40 may be individually denoted as DC power sources 40-1 to 40-N when the distinction is necessary.

When the DC/DC converter 10 is controlled in the output voltage-based control mode, the DC link voltage target value $v^*_{dc}$ is expressed by Equation (2).

[Math. 2]

$$v^*_{dc} = \max(v^*_{dc\,load}, v^*_{dc\,inv}, v_{conv\,lowlimit1}, \cdots, v_{conv\,lowlimit\,N}) \qquad (2)$$

where

$v_{conv\,lowlimit\,j}$: lower limit value of the output voltage of the j-th DC/DC converter (j is an integer from 1 to N)

It is desirable that only one DC/DC converter 10 be controlled in the output voltage-based control mode. Preferably, a DC/DC converter 10 having the largest lower limit value $v_{conv\,lowlimit}$ of the output voltage is controlled in the output voltage-based control mode. Applying the output voltage-based control mode to a DC/DC converter 10 that does not have the largest $v_{conv\,lowlimit}$ requires that the output voltages of the other DC/DC converters 10 be matched to this lower limit value, which may cause an accuracy issue. On the other hand, driving the DC/DC converter 10 with the largest $v_{conv\,lowlimit}$ in the output voltage-based control mode eliminates the need for the other DC/DC converters 10 to match their lower limit values.

When the power conversion system 1A of the first modification is controlled in the output current-based control mode (output power-based control mode), all of the DC/DC converters 10 may be controlled in the output current-based control mode (output power-based control mode).

(Power Conversion System 1B of Second Modification)

As a second modification of the power conversion system 1, a power conversion system 1B including multiple DC loads 50 will be described.

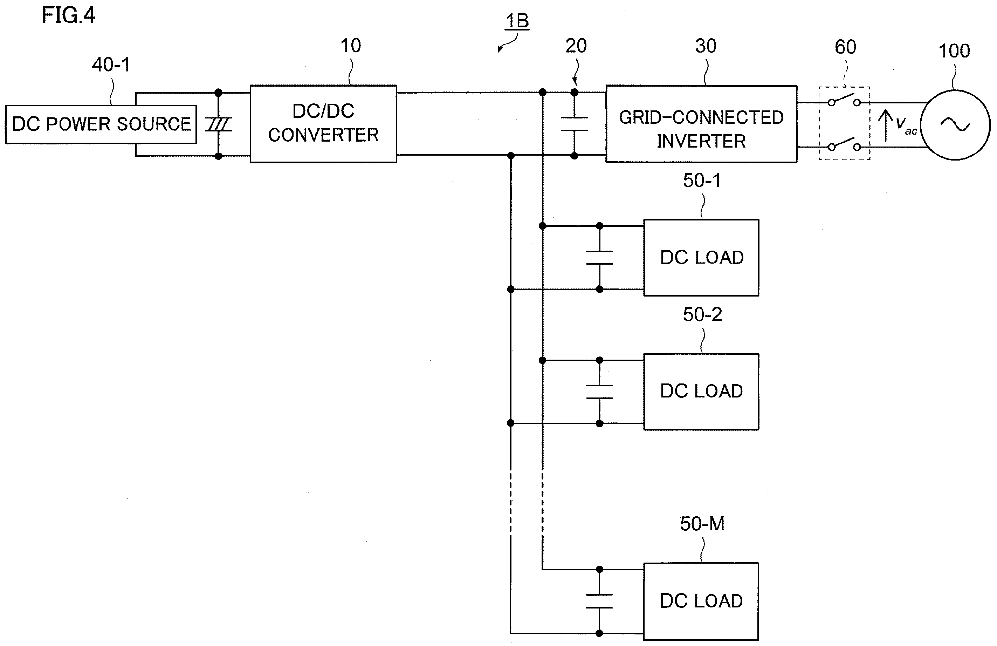

FIG. 4 illustrates the power conversion system 1B including M DC loads 50, where M is an integer greater than or equal to two. The M DC loads 50 may be individually denoted as DC loads 50-1 to 50-M when the distinction is necessary.

When the DC/DC converter 10 is controlled in the output voltage-based control mode, the DC link voltage target value $v^*_{dc}$ is expressed by Equation (3).

[Math. 3]

$$v^*_{dc} = \max(v^*_{dc\ load1}, \cdots, v^*_{dc\ load\ M}, v^*_{dc\ inv}, v_{conv\ lowlimit}) \qquad (3)$$

where

$v^*_{dc\ load\ k}$: DC link voltage target value based on the k-th DC load (k is an integer from 1 to M)

When the power conversion system 1B of the second modification is controlled in the output current-based control mode (output power-based control mode), all of the DC/DC converters 10 may be controlled in the output current-based control mode (output power-based control mode).

(Power Conversion System 1C of Third Modification)

As a third modification of the power conversion system 1, a power conversion system 1C including multiple sets of the DC power source 40 and the DC/DC converter 10 and including multiple DC loads 50 will be described.

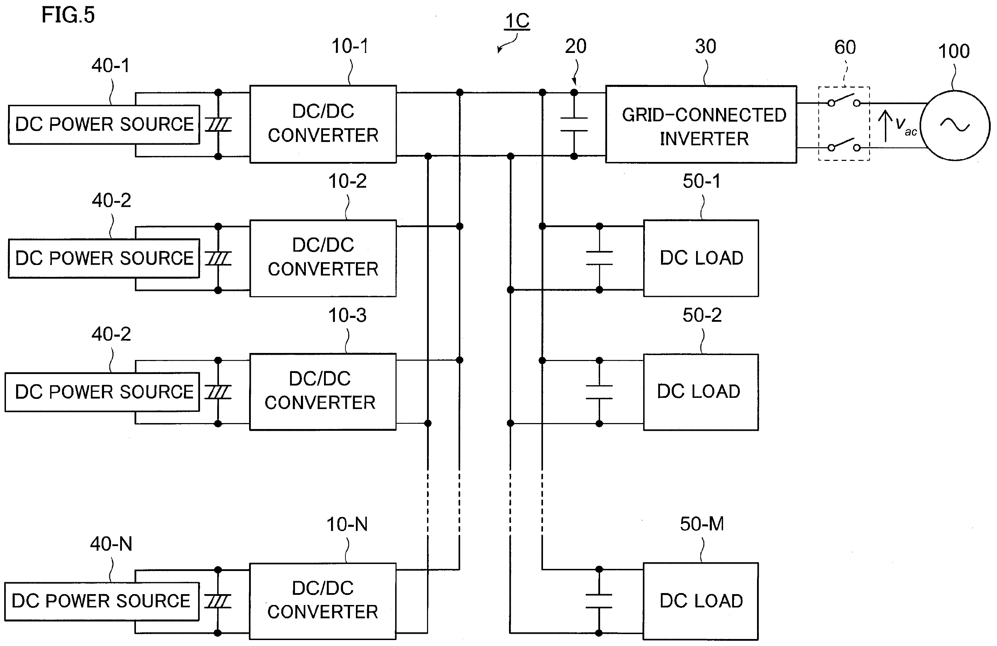

FIG. 5 illustrates the power conversion system 1C including N sets of the DC power source 40 and the DC/DC converter 10 and including M DC loads 50, where each of M and N is an integer greater than or equal to two. The N DC/DC converters 10 may be individually denoted as DC/DC converters 10-1 to 10-N when the distinction is necessary. The N DC power sources 40 may be individually denoted as DC power sources 40-1 to 40-N when the distinction is necessary. The M DC loads 50 may be individually denoted as DC loads 50-1 to 50-M when the distinction is necessary.

When the DC/DC converter 10 is controlled in the output voltage-based control mode, the DC link voltage target value $v^*_{dc}$ is expressed by Equation (4).

[Math. 4]

$$v^*_{dc} = \max(v^*_{dc\ load1}, \cdots, v^*_{dc\ load\ M}, v^*_{dc\ inv}, v_{conv\ lowlimit1}, \cdots, v_{conv\ lowlimit\ N}) \qquad (4)$$

where

$v^*_{dc\ load\ k}$: DC link voltage target value based on the k-th DC load (k is an integer from 1 to M)
$v_{conv\ lowlimit\ j}$; lower limit value of the output voltage of the j-th DC/DC converter (j is an integer from 1 to N)

When the power conversion system 1C of the third modification is controlled in the output current-based control mode (output power-based control mode), all of the DC/DC converters 10 may be controlled in the output current-based control mode (output power-based control mode).

FIG. 1 illustrates a buck-boost converter as the DC/DC converter 10. However, the DC/DC converter 10 may be any known DC/DC converter, such as a dual active bridge (DAB) converter, a flyback converter, or a combination thereof. When only boost operation is required, the DC/DC converter 10 may be a boost converter, and when only buck operation is required, the DC/DC converter 10 may be a buck converter.

(Method for Determining the DC link voltage target value $v^*_{dc}$)

The DC link voltage $v_{dc}$ is an output of the DC/DC converter 10. The DC link voltage $v_{dc}$ is controlled in accordance with the DC link voltage target value $v^*_{dc}$. In the output voltage-based control mode, the DC/DC converter 10 obtains information on the states of the DC load 50 and the grid-connected inverter 30 to determine the DC link voltage target value $v^*_{dc}$. When the system includes multiple DC/DC converters 10, the DC/DC converter 10 operated in the output voltage-

EP 4 753 132 A1

based control mode obtains information on the states of the DC load 50, the grid-connected inverter 30, and the other DC/DC converters to determine the DC link voltage target value $v^*_{dc}$.

A specific description will be given below for the power conversion system 1 that includes a single set of the DC/DC converter 10 and the DC power source 40, and a single DC load 50. The DC/DC converter 10 determines the DC link voltage target value $v^*_{dc}$ from the DC link voltage target value $v^*_{dc\,load}$ based on the DC load 50, obtained from the DC load 50, and the DC link voltage target value $v^*_{dc\,inv}$ based on the grid-connected inverter 30, obtained from the grid-connected inverter 30. Note that the DC/DC converter 10 may obtain $v^*_{dc\,load}$ from the DC load 50, or may obtain state information necessary to determine $v^*_{dc\,load}$. State information necessary to determine $v^*_{dc\,load}$ includes, for example, a modulation index of the power converter and, when the power converter includes a rotating electrical machine to be operated at variable speed, a rotational speed and output power of the rotating electrical machine. The rotational speed and output power of the rotating electric machine may be a detected value, an estimated value, or a target value.

Further, the DC/DC converter 10 may obtain $v^*_{dc\,inv}$ from the grid-connected inverter 30, or may obtain state information necessary to determine $v^*_{dc\,inv}$. State information necessary to determine $v^*_{dc\,inv}$ includes, for example, the AC voltage $v_{ac}$ of the power grid.

A separate controller may be configured to obtain $v^*_{dc\,load}$ or state information necessary to determine $v^*_{dc\,load}$ from the DC load 50, and to obtain $v^*_{dc\,inv}$ or state information necessary to determine $v^*_{dc\,inv}$ from the grid-connected inverter 30. In this case, the controller controls the DC/DC converter 10 operated in the output voltage-based control mode.

The controller may be configured as a computer (or a microcomputer) including a CPU, a ROM, a RAM, and the like. The ROM includes a non-volatile rewritable memory. The controller operates as the program stored in the ROM is loaded into the RAM and executed. Alternatively, the controller may be configured as an ASIC or the like.

In the power conversion systems 1B and 1C each including multiple DC loads 50, $v^*_{dc\,load}$ or state information necessary to determine $v^*_{dc\,load}$ may be obtained from each of the DC loads 50. In the power conversion systems 1A and 1C each including multiple DC/DC converters 10, the DC/DC converter 10 operated in the output voltage-based control mode may obtain state information of the other DC/DC converters 10. State information of the DC/DC converter 10 includes, for example, the lower limit value $v_{conv\,lowlimit}$ of the output voltage of the DC/DC converter 10.

(Operation Modes of Grid-Connected Inverter 30)

The foregoing description has discussed the case where the grid-connected inverter 30 is in parallel operation with reverse power flow. Operations of the power conversion system 1, including the parallel operation with forward power flow and islanding operation, will now be discussed in detail.

First, operation modes of the grid-connected inverter 30 in the power conversion system 1 will be described.

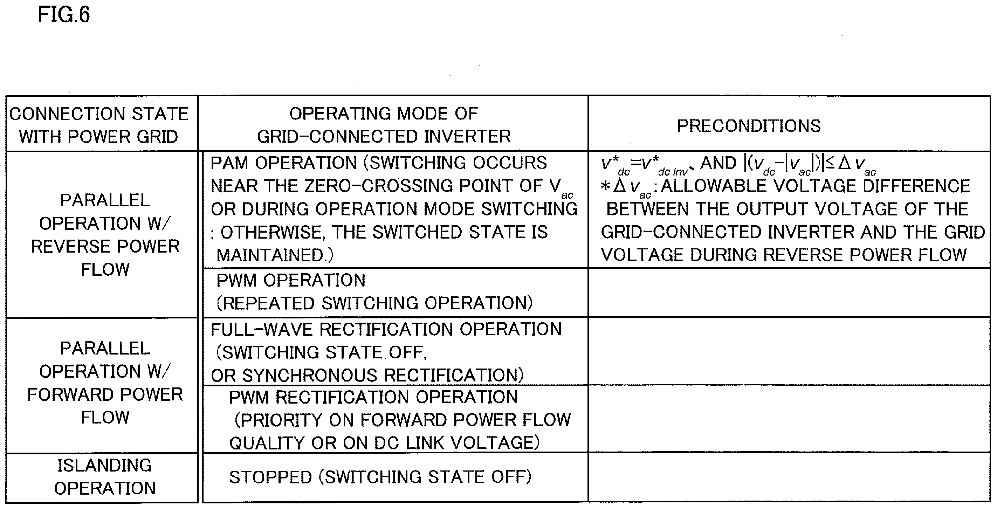

FIG 6 illustrates operation modes of the grid-connected inverter 30. In FIG. 6, the state of connection with the power grid 100, the operation modes of the grid-connected inverter 30, and the preconditions are shown from the left side.

During parallel operation with reverse power flow, the grid-connected inverter 30 performs pulse amplitude modulation (PAM) operation or PWM operation.

The PAM operation refers to an operation in which two of the four switching elements Sap, San, Sbp, and Sbn constituting the grid-connected inverter 30 (e.g., switching elements Sap and Sbn, or switching elements San and Sbp) are placed in the ON state, while the other two switching elements are maintained in the OFF state. In this operation, the ON and OFF states are switched near the zero-crossing point of $v_{ac}$ or at the time of operation mode switching.

The PAM operation is used when the DC link voltage target value $v^*_{dc}$ matches the DC link voltage target value $v^*_{dc\,inv}$ based on the grid-connected inverter 30 and the absolute value of difference between the DC link voltage $v_{dc}$ and the absolute value $|v_{ac}|$ of the AC voltage $v_{ac}$ - that is, $|(v_{dc} - |v_{ac}|)|$ - is smaller than the allowable voltage difference $\Delta v_{ac}$ between the output voltage of the grid-connected inverter 30 and the grid voltage $v_{ac}$ during reverse power flow.

The PWM operation refers to an operation in which the switching elements Sap, San, Sbp, and Sbn of the grid-connected inverter 30 are repeatedly switched.

During parallel operation with forward power flow, the grid-connected inverter 30 performs full-wave rectification operation or PWM rectification operation.

The full-wave rectification operation refers to an operation in which the switching elements Sap, San, Sbp, and Sbn of the grid-connected inverter 30 are maintained in the OFF state, and rectification is performed by the diodes Dap, Dan, Dbp, and Dbn. When the switching elements Sap, San, Sbp, and Sbn are unipolar elements capable of conducting current in the reverse direction as well, synchronous rectification may be performed by turning on the switching elements Sap, San, Sbp, and Sbn in synchronization with the timing at which the respective diodes Dap, Dan, Dbp, and Dbn become forward-biased. The full-wave rectification operation and the synchronous rectification operation are examples of the rectification operation.

The PWM rectification operation refers to an operation in which the switching elements Sap, San, Sbp, and Sbn of the grid-connected inverter 30 are repeatedly switched. When priority is given to power quality control during forward power flow, control is performed by regulating the current value of the forward power flow and the phase difference between the current and the voltage. Priority may also be given to controlling the DC link voltage $v_{dc}$.

During islanding operation, the switching elements Sap, San, Sbp, and Sbn of the grid-connected inverter 30 are maintained in the OFF state.

(Operation Modes of the Power Conversion System 1)

(1) Operation mode for feeding power to the DC load 50 during parallel operation with reverse power flow

An operation mode for feeding power to the DC load 50 during parallel operation with reverse power flow, in which power is supplied from the DC side to the AC side, will be described. The following description assumes a configuration with one DC/DC converter 10 and one DC load 50.

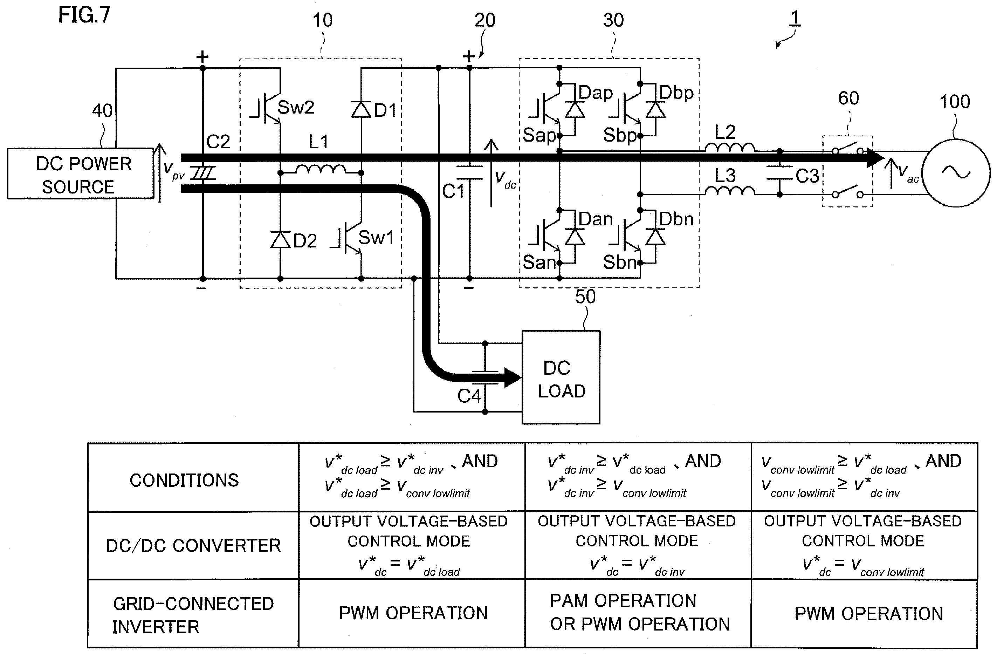

FIG. 7 illustrates the operation mode for feeding power to the DC load 50 during parallel operation with reverse power flow. The upper part of the figure shows the power conversion system 1, and the lower part shows the operation of the DC/DC converter 10 and the operation of the grid-connected inverter 30. Here, the DC/DC converter 10 is driven in the output voltage-based control mode.

In the upper part of FIG. 7, power flow in the power conversion system 1 is indicated by arrows. Power is supplied from the DC power source 40 to both the power grid 100 and the DC load 50. The DC link voltage target value $v^*_{dc}$ shown in the lower part of FIG. 7, which is the output of the DC/DC converter 10, is determined based on the relative magnitudes of the DC link voltage target value $v^*_{dc\,load}$ based on the DC load 50, the DC link voltage target value $v^*_{dc\,inv}$ based on the grid-connected inverter 30, and the lower limit value $v_{conv\,lowlimit}$ of the output voltage of the DC/DC converter 10, as shown in Equation (1).

When $v^*_{dc\,load}$ is greater than both $v^*_{dc\,inv}$ and $v_{conv\,lowlimit}$, $v^*_{dc}$ is set to the DC link voltage target value $v^*_{dc\,load}$ based on the DC load 50. Since $v^*_{dc}$ is greater than $v^*_{dc\,inv}$, the grid-connected inverter 30 performs PWM operation to interface the DC side with the AC side.

When $v^*_{dc\,inv}$ is greater than both $v^*_{dc\,load}$ and $v_{conv\,lowlimit}$, $v^*_{dc}$ is set to $v^*_{dc\,inv}$. Since $v^*_{dc}$ is $v^*_{dc\,inv}$, the grid-connected inverter 30 performs PAM operation or PWM operation to interface the DC side with the AC side.

When $v_{conv\,lowlimit}$ is greater than both $v^*_{dc\,load}$ and $v^*_{dc\,inv}$, $v^*_{dc}$ is set to $v_{conv\,lowlimit}$. Since $v^*_{dc}$ is $v_{conv\,lowlimit}$, the grid-connected inverter 30 performs PWM operation to interface the DC side with the AC side.

The DC link voltage target value $v^*_{dc\,load}$ based on the DC load 50 varies depending on the type and operating state of the DC load 50. One example is discussed below in which the DC link voltage target value $v^*_{dc}$ varies as a function of the change in the DC link voltage target value $v^*_{dc\,load}$ based on the DC load 50.

FIGS. 8A to 8C illustrate the DC link voltage target value $v^*_{dc}$ as a function of the change in the DC link voltage target value $v^*_{dc\,load}$ based on the DC load 50. FIG. 8A illustrates a case where the DC link voltage target value $v^*_{dc\,load}$ based on the DC load 50 is smaller than the lower limit value $v_{conv\,lowlimit}$ of the output voltage of the DC/DC converter 10. FIG. 8B illustrates a case where the DC link voltage target value $v^*_{dc\,load}$ based on the DC load 50 is greater than the lower limit value $v_{conv\,lowlimit}$ of the output voltage of the DC/DC converter 10 but smaller than the absolute value $|v_{ac\,peak}|$ of the peak voltage of the AC voltage $v_{ac}$. FIG. 8C illustrates a case where the DC link voltage target value $v^*_{dc\,load}$ based on the DC load 50 is greater than the absolute value $|v_{ac\,peak}|$ of the peak voltage of the AC voltage $v_{ac}$. The vertical axis represents voltage (V), and the horizontal axis represents time (seconds). The time progresses from time t0 to time t6 in order. Time t0 corresponds to 0 seconds, time t3 to 0.01 seconds, and time t6 to 0.02 seconds. FIGS. 8A, 8B, and 8C each show one cycle of 50 Hz AC (alternating current). The period from time t0 to time t6 corresponds to one cycle of the AC voltage $v_{ac}$. The period from time t0 to time t3 and the period from time t3 to time t6 each correspond to a half cycle of the AC voltage $v_{ac}$. One cycle consists of the repetition of two half cycles. Hereinafter, only the half cycle from time t0 to time t3 will be described. The same applies to the other cases.

The DC link voltage target value $v^*_{dc\,inv}$ based on the grid-connected inverter 30 is set to the absolute value $|v_{ac}|$ of the AC voltage $v_{ac}$ ($v^*_{dc\,inv} = |v_{ac}|$). Hereinafter, the absolute value $|v_{ac}|$ of the AC voltage $v_{ac}$ will be referred to as an AC voltage absolute value $|v_{ac}|$.

In each of FIGS. 8A, 8B, and 8C, the DC link voltage target value $v^*_{dc}$ is indicated by a thick solid line, the DC link voltage target value $v^*_{dc\,load}$ based on the DC load 50 is indicated by a dotted line, the lower limit value $v_{conv\,lowlimit}$ of the output voltage of the DC/DC converter 10 is indicated by a dashed line, and the DC link voltage target value $v^*_{dc\,inv}$ based on the grid-connected inverter 30 (which equals the absolute value $|v_{ac}|$ of the AC voltage $v_{ac}$) is indicated by a thin solid line. Note that overlapping portions of the lines are depicted with an offset.

FIG. 8A illustrates a case where $v^*_{dc\,load}$ is smaller than $v_{conv\_lowlimit}$. In FIG. 8A, times t1, t2, t4, and t5 are the time points at which $v_{conv\_lowlimit}$ intersects $v^*_{dc\,inv}$ ($= |v_{ac}|$).

During the period from time t0 to time t1, $v_{conv\,lowlimit}$ is greater than both $v^*_{dc\,load}$ and $v^*_{dc\,inv}$ ($= |v_{ac}|$). The target value $v^*_{dc}$ is set to $v_{conv\,lowlimit}$. The target value $v^*_{dc\,inv}$ ($= |v_{ac}|$) is smaller than $v^*_{dc}$. Accordingly, the grid-connected inverter 30 performs PWM operation to interface the DC side with the AC side.

During the period from time t1 to time t2, $v^*_{dc\,inv}$ ($= |v_{ac}|$) is greater than both $v_{conv\,lowlimit}$ and $v^*_{dc\,load}$. The target value $v^*_{dc}$ is set to $v^*_{dc\,inv}$ ($= |v_{ac}|$). Since $v^*_{dc}$ is $|v_{ac}|$, the grid-connected inverter 30 performs PAM operation to interface the DC side with the AC side.

During the period from time t2 to time t3, the situation is the same as during the period from time t0 to time t1, so that $v^*_{dc}$ is again set to $v_{conv\,lowlimit}$. The grid-connected inverter 30 performs PWM operation to interface the DC side with the AC side.

In FIG. 8A, $v^*_{dc\,load}$ is smaller than $v^*_{dc}$. A sufficient voltage (appropriate voltage) for operation is supplied to the DC load 50.

FIG. 8B illustrates a case where $v^*_{dc\,load}$ is greater than $v_{conv\,lowlimit}$ but smaller than $|v_{ac\,peak}|$. In FIG. 8B, times t2, t3, t4, and t5 are the time points at which $v^*_{dc\,load}$ intersects $v^*_{dc\,inv}$ ($= |v_{ac}|$). Times t2, t3, t4, and t5 are different from those in FIG. 8A. Unless otherwise noted, the same applies to the other cases as well.

During the period from time t0 to time t1, $v^*_{dc\,load}$ is greater than both $v_{conv\,lowlimit}$ and $v^*_{dc\,inv}$ ($= |v_{ac}|$). The target value $v^*_{dc}$ is set to $v^*_{dc\,load}$. The absolute value $|v_{ac}|$ is smaller than $v^*_{dc}$. Accordingly, the grid-connected inverter 30 performs PWM operation to interface the DC side with the AC side.

During the period from time t1 to time t2, $v^*_{dc\,inv}$ ($= |v_{ac}|$) is greater than both $v_{conv\,lowlimit}$ and $v^*_{dc\,load}$. The target value $v^*_{dc}$ is set to $v^*_{dc\,inv}$ ($= |v_{ac}|$). Since $v^*_{dc}$ is $|v_{ac}|$, the grid-connected inverter 30 performs PAM operation to interface the DC side with the AC side.

During the period from time t2 to time t3, the situation is the same as during the period from time t0 to time t1, so that $v^*_{dc}$ is again set to $v^*_{dc\,load}$. The grid-connected inverter 30 performs PWM operation to interface the DC side with the AC side.

During the periods from time t0 to time t1 and from time t2 to time t3, the DC link voltage target value $v^*_{dc}$ is set to the DC link voltage target value $v^*_{dc\,load}$ based on the DC load 50, and an appropriate voltage is supplied to the DC load 50. During the period from time t1 to time t2, the DC load 50 is supplied with the DC link voltage target value $v^*_{dc\,inv}$ ($= |v_{ac}|$) based on the grid-connected inverter 30, which is greater than the DC link voltage target value $v^*_{dc\,load}$ based on the DC load 50. Within the half cycle of the AC voltage from time t0 to time t3, the periods from time t0 to time t1 and from time t2 to time t3 are periods during which the DC link voltage $v_{dc}$ is controlled in accordance with the DC load 50. The period from time t1 to time t2 is a period during which the DC link voltage $v_{dc}$ is controlled to be a voltage determined by the grid voltage. This prevents excessive voltage from being applied to the DC load 50.

FIG. 8C illustrates a case where $v^*_{dc\,load}$ is greater than $|v_{ac\,peak}|$.

During the period from time t0 to time t6, $v^*_{dc\,load}$ is greater than both $v_{conv\_lowlimit}$ and $v^*_{dc\,inv}$ ($= |v_{ac}|$). The target value $v^*_{dc}$ is set to $v^*_{dc\,load}$. Since $v^*_{dc}$ is greater than $|v_{ac}|$, the grid-connected inverter 30 performs PWM operation to interface the DC side with the AC side.

During the period from time t0 to time t6, an appropriate voltage is supplied to the DC load 50. This improves the operating efficiency of the DC load 50.

Even if the DC link voltage target value $v^*_{dc\,load}$ based on the DC load 50 changes (varies), it is sufficient to adjust the DC link voltage target value $v^*_{dc}$ in the manner shown in FIGS. 8A, 8B, and 8C. Adjusting the DC link voltage target value $v^*_{dc}$ changes (varies) the DC link voltage $v_{dc}$, thereby enabling the supply of voltage (power) required for operating the DC load 50.

The following describes cases in which the DC link voltage target value $v^*_{dc\,inv}$ based on the grid-connected inverter 30 is set to the AC voltage absolute value $|v_{ac}|$ plus a voltage margin $v_{margin}$ (i.e., $v^*_{dc\,inv} = |v_{ac}| + v_{margin}$).

FIGS. 9A to 9C illustrates a change in the DC link voltage target value $v^*_{dc\,load}$ when a voltage margin $v_{margin}$ is added. FIG. 9A illustrates a case where the DC link voltage target value $v^*_{dc\,load}$ based on the DC load 50 is smaller than the lower limit value $v_{conv\,lowlimit}$ of the output voltage of the DC/DC converter 10. FIG. 9B illustrates a case where the DC link voltage target value $v^*_{dc\,load}$ based on the DC load 50 is greater than the lower limit value $v_{conv\,lowlimit}$ of the output voltage of the DC/DC converter 10 but smaller than a value obtained by adding a voltage margin $v_{margin}$ to the absolute value $|v_{ac\,peak}|$ of the peak voltage of the AC voltage $v_{ac}$. FIG. 9C illustrates a case where the DC link voltage target value $v^*_{dc\,load}$ based on the DC load 50 is greater than the value obtained by adding a voltage margin $v_{margin}$ to the absolute value $|v_{ac\,peak}|$ of the peak voltage of the AC voltage $v_{ac}$. The vertical and horizontal axes and other elements are the same as those in FIGS. 8A to 8C.

The DC link voltage target value $v^*_{dc\,inv}$ based on the grid-connected inverter 30 (which equals the absolute value $|v_{ac}|$ of the AC voltage $v_{ac}$ plus the voltage margin $v_{margin}$) is indicated by a dash-dot-dotted line. The other elements are the same as in FIGS. 8A to 8C.

FIG. 9A illustrates a case where $v^*_{dc\,load}$ is smaller than $v_{conv\,lowlimit}$. Times t1, t2, t4, and t5 are the time points at which $v^*_{dc\,inv}$ ($= |v_{ac}| + v_{margin}$) intersects $v_{conv\,lowlimit}$.

During the period from time t0 to time t1, $v_{conv\,lowlimit}$ is greater than both $v^*_{dc\,load}$ and $v^*_{dc\,inv}$. The target value $v^*_{dc}$ is set to $v_{conv\,lowlimit}$.

During the period from time t1 to time t2, $v^*_{dc\,inv}$ is greater than both $v^*_{dc\,load}$ and $v_{conv\,lowlimit}$. The target value $v^*_{dc}$ is set to $v^*_{dc\,inv}$.

During the period from time t2 to time t3, $v^*_{dc}$ is again set to $v_{conv\,lowlimit}$.

During the period from time t0 to time t3, $v^*_{dc}$ differs from $|v_{ac}|$. Accordingly, the grid-connected inverter 30 performs PWM operation to interface the DC side with the AC side.

FIG. 9B illustrates a case where $v^*_{dc\,load}$ is greater than $v_{conv\,lowlimit}$ but smaller than $|v_{ac\,peak}| + v_{margin}$. Times t1, t2, t4, and t5 are the time points at which $v^*_{dc\,load}$ intersects $v^*_{dc\,inv}$ $(= |v_{ac}| + v_{margin})$.

During the period from time t0 to time t1, $v^*_{dc\,load}$ is greater than both $v_{conv\,lowlimit}$ and $v^*_{dc\,inv}$ $(= |v_{ac}| + v_{margin})$. The target value $v^*_{dc}$ is set to $v^*_{dc\,load}$.

During the period from time t1 to time t2, $v^*_{dc\,inv}$ $(= |v_{ac}| + v_{margin})$ is greater than both $v^*_{dc\,load}$ and $v_{conv\,lowlimit}$. The target value $v^*_{dc}$ is set to $v^*_{dc\,inv}$ $(= |v_{ac}| + v_{margin})$.

During the period from time t2 to time t3, the situation is the same as during the period from time t0 to time t1, so that $v^*_{dc}$ is again set to $v^*_{dc\,load}$.

During the period from time t0 to time t3, there is no period in which $v^*_{dc}$ matches $|v_{ac}|$. Accordingly, the grid-connected inverter 30 performs PWM operation to interface the DC side with the AC side.

FIG. 9C illustrates a case where $v^*_{dc\,load}$ is greater than $|v_{ac\,peak}| + v_{margin}$.

During the period from time t0 to time t3, $v^*_{dc\,load}$ is greater than both $v_{conv\,lowlimit}$ and $v^*_{dc\,inv}$. The target value $v^*_{dc}$ is set to $v^*_{dc\,load}$.

During the period from time t0 to time t3, there is no period in which $v^*_{dc}$ matches $|v_{ac}|$. Accordingly, the grid-connected inverter 30 performs PWM operation to interface the DC side with the AC side.

The DC link voltage target value $v^*_{dc\,inv}$ based on the grid-connected inverter 30 is set to the absolute value $|v_{ac}|$ of the AC voltage $v_{ac}$ plus the voltage margin $v_{margin}$ $(v^*_{dc\,inv} = |v_{ac}| + v_{margin})$. This ensures that the DC voltage required by the grid-connected inverter 30 is maintained even if the DC link voltage $v_{dc}$ fluctuates due to the DC load 50, thereby suppressing waveform distortion in the output of the grid-connected inverter 30.

(2) Operation mode in which no power is fed to the DC load 50 during parallel operation with reverse power flow

During parallel operation with reverse power flow, where power is supplied from the DC side to the AC side, an operation mode may be employed in which no power is fed to the DC load 50. In this mode, all power from the DC power source 40 is fed back to the power grid 100.

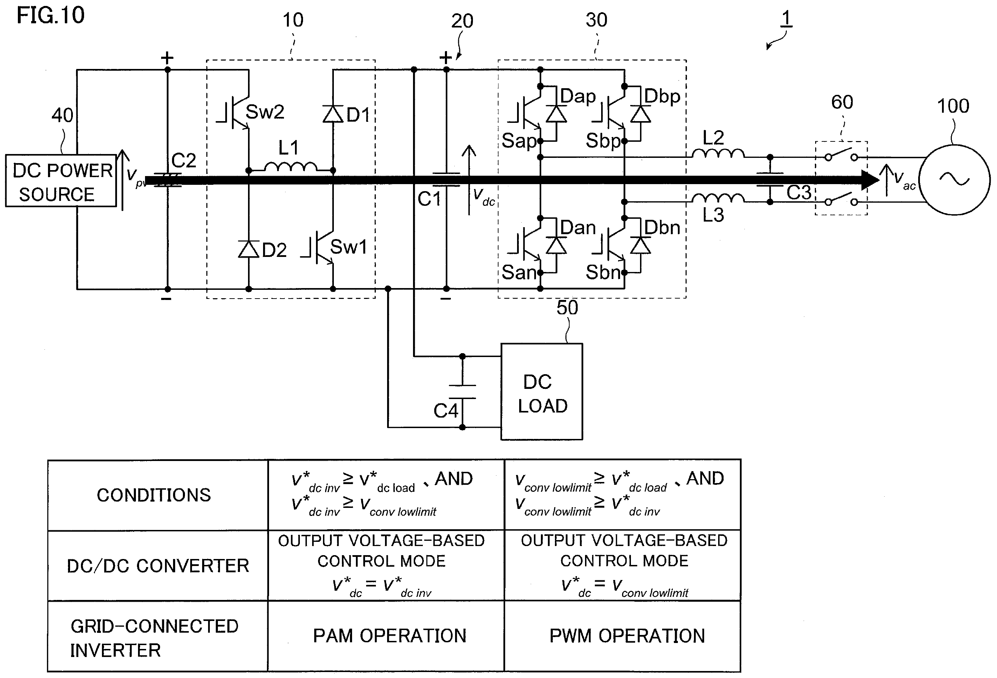

FIG. 10 illustrates the operation mode in which no power is fed to the DC load 50 during parallel operation with reverse power flow. The upper part of the figure shows the power conversion system 1, and the lower part shows the operation of the DC/DC converter 10 and the operation of the grid-connected inverter 30. Here, the DC link voltage target value $v^*_{dc\,inv}$ based on the grid-connected inverter 30 is set to the absolute value $|v_{ac}|$ of the AC voltage $v_{ac}$ $(v^*_{dc\,inv} = |v_{ac}|)$. The DC/DC converter 10 is driven in the output voltage-based control mode.

In the upper part of FIG. 10, power flow in the power conversion system 1 is indicated by an arrow. Power is supplied from the DC power source 40 to the power grid 100. The DC link voltage target value $v^*_{dc\,load}$ based on the DC load 50 is 0 V. The DC link voltage target value $v^*_{dc}$ shown in the lower part of FIG. 10 is determined based on the relative magnitudes of the DC link voltage target value $v^*_{dc\,inv}$ $(= |v_{ac}|)$ based on the grid-connected inverter 30 and the lower limit value $v_{conv\,lowlimit}$ of the output voltage of the DC/DC converter 10, as shown in Equation (1).

When $v^*_{dc\,inv}$ is greater than both $v^*_{dc\,load}$ and $v_{conv\,lowlimit}$, $v^*_{dc}$ is set to $v^*_{dc\,inv}$ $(= |v_{ac}|)$. Since $v^*_{dc}$ is $|v_{ac}|$, the grid-connected inverter 30 performs PAM operation to interface the DC side with the AC side.

When $v_{conv\,lowlimit}$ is greater than both $v^*_{dc\,load}$ and $v^*_{dc\,inv}$ $(= |v_{ac}|)$, $v^*_{dc}$ is set to $v_{conv\,lowlimit}$. Since $v^*_{dc}$ is $v_{conv\,lowlimit}$, the grid-connected inverter 30 performs PWM operation to interface the DC side with the AC side.

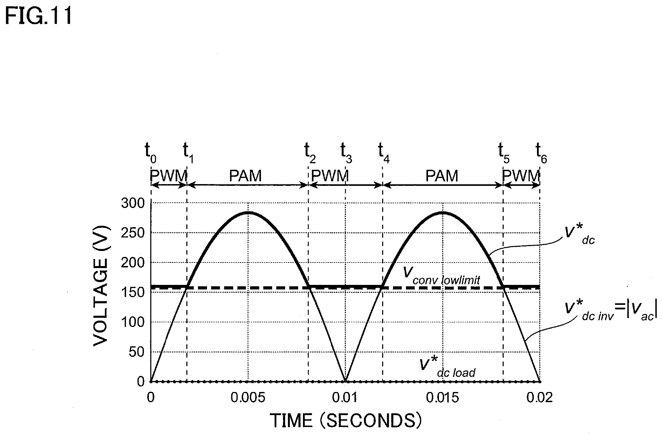

FIG. 11 illustrates the DC link voltage target value $v^*_{dc}$ in the operation mode in which no power is fed to the DC load 50 during parallel operation with reverse power flow. In FIG. 11, times t1, t2, t4, and t5 are the time points at which $v_{conv\,lowlimit}$ intersects $v^*_{dc\,inv}$ $(= |v_{ac}|)$.

During the period from time t0 to time t1, $v_{conv\,lowlimit}$ is greater than $v^*_{dc\,inv}$ $(= |v_{ac}|)$. Accordingly, $v^*_{dc}$ is set to $v_{conv\,lowlimit}$. The grid-connected inverter 30 performs PWM operation to interface the DC side with the AC side.

During the period from time t1 to time t2, $v^*_{dc\,inv}$ $(= |v_{ac}|)$ is greater than $v_{conv\,lowlimit}$. Accordingly, $v^*_{dc}$ is set to $v^*_{dc\,inv}$ $(= |v_{ac}|)$. Since $v^*_{dc}$ is $|v_{ac}|$, the grid-connected inverter 30 performs PAM operation to interface the DC side with the AC side.

(3) Operation mode in which power is fed to the DC load 50 from both the DC power source 40 and the power grid 100 during parallel operation with forward power flow.

During parallel operation with forward power flow, where power is supplied from the AC side to the DC side, an operation mode may be employed in which power is fed to the DC load 50 from both the DC power source 40 and the power grid 100. In this mode, the DC power source 40 and the power grid 100 operate in parallel to feed power to the DC load 50.

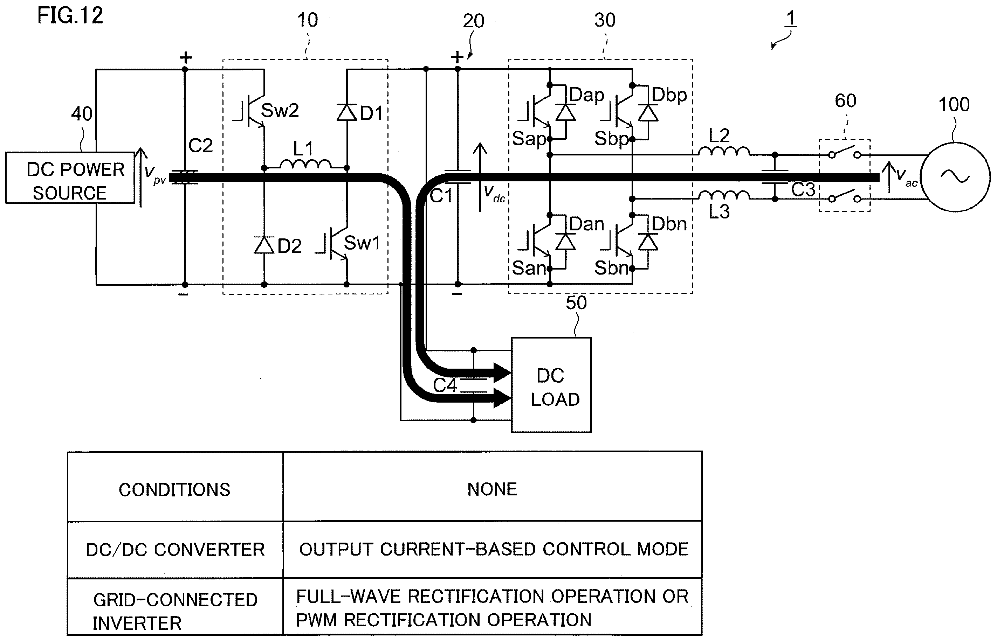

FIG. 12 illustrates the operation mode in which power is fed to the DC load 50 from both the DC power source 40 and the power grid 100 during parallel operation with forward power flow. The upper part of the figure shows the power conversion system 1, and the lower part shows the operation of the DC/DC converter 10 and the operation of the grid-connected inverter 30.

In the upper part of FIG. 12, power flow in the power conversion system 1 is indicated by arrows. Power is fed to the DC load 50 from both the DC power source 40 and the power grid 100. As shown in the lower part of FIG. 12, the grid-connected inverter 30 performs either the full-wave rectification operation or PWM rectification operation. The operation of the grid-connected inverter 30 is appropriately selected in accordance with constraints on the forward power flow (current), such as power factor, harmonic content, current peak, or the efficiency of the grid-connected inverter 30. Since the DC link voltage target value $v^*_{dc}$ is adjusted by the grid-connected inverter 30, the DC/DC converter 10 operates in the output current-based control mode.

(4) Operation mode in which power is fed to the DC load 50 from the power grid 100 during parallel operation with forward power flow

During parallel operation with reverse power flow, where power is supplied from the AC side to the DC side, an operation mode may be employed in which power is fed to the DC load 50 from the power grid 100. In this mode, the DC power source 40 does not feed power to the DC load 50.

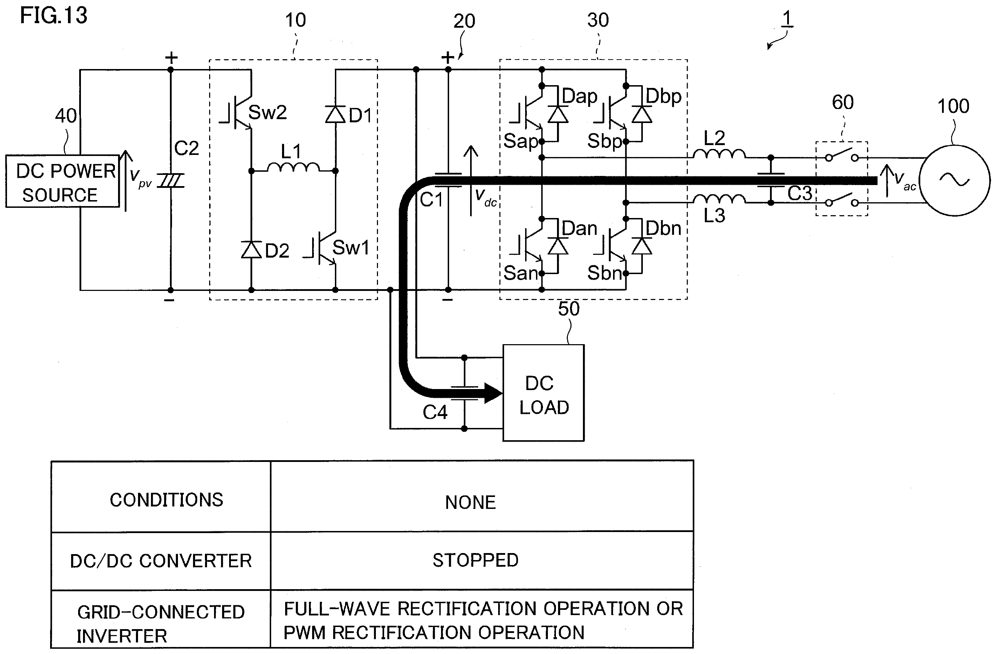

FIG. 13 illustrates the operation mode in which power is fed to the DC load 50 from the power grid 100 during parallel operation with forward power flow. The upper part of the figure shows the power conversion system 1, and the lower part shows the operation of the DC/DC converter 10 and the operation of the grid-connected inverter 30.

In the upper part of FIG. 13, power flow in the power conversion system 1 is indicated by an arrow. Power is fed to the DC load 50 from the power grid 100. As shown in the lower part of FIG. 13, the grid-connected inverter 30 performs either the full-wave rectification operation or PWM rectification operation. The operation of the grid-connected inverter 30 is appropriately selected in accordance with constraints on the forward power flow (current), such as power factor, harmonic content, current peak, or the efficiency of the grid-connected inverter 30. The DC/DC converter 10 is in a stopped state.

(5) Operation mode in which power is fed to the DC load 50 from the DC power source 40 during islanding operation

In an operation mode in which power is fed to the DC load 50 from the DC power source 40 during islanding operation, no power is fed to the DC load 50 from the power grid 100.

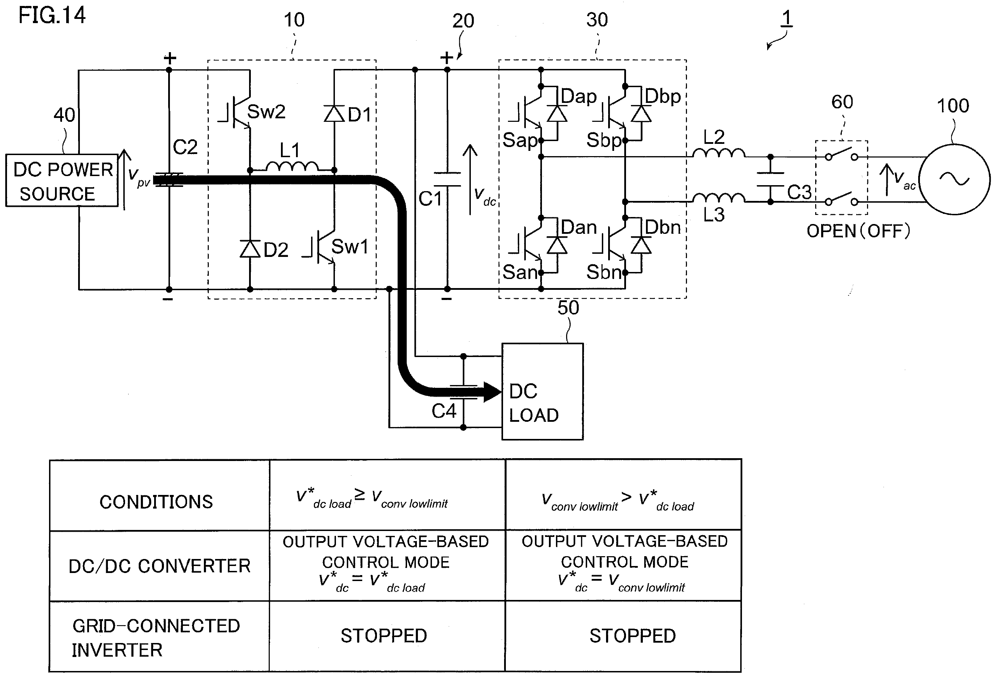

FIG. 14 illustrates the operation mode in which power is fed to the DC load 50 from the DC power source 40 during islanding operation. The upper part of the figure shows the power conversion system 1, and the lower part shows the operation of the DC/DC converter 10 and the operation of the grid-connected inverter 30.

In the upper part of FIG. 14, power flow in the power conversion system 1 is indicated by an arrow. Power is fed to the DC load 50 from the DC power source 40. As shown in the lower part of FIG. 14, the grid-connected inverter 30 is in a stopped state, so that there is no DC link voltage target value $v^*_{dc\,inv}$ based on the grid-connected inverter 30. As shown in Equation (1), the DC link voltage target value $v^*_{dc}$ is determined based on the relative magnitudes of the DC link voltage target value $v^*_{dc\,load}$ based on the DC load 50 and the lower limit value $v_{conv\_lowlimit}$ of the output voltage of the DC/DC converter 10. The DC/DC converter 10 operates in the output voltage-based control mode.

When $v^*_{dc\,load}$ is greater than $v_{conv\,lowlimit}$ ($v^*_{dc\,load} \geq v_{conv\,lowlimit}$), $v^*_{dc}$ is set to $v^*_{dc\,load}$, and when $v_{conv\,lowlimit}$ is greater than $v^*_{dc\,load}$ ($v_{conv\,lowlimit} \geq v^*_{dc\,load}$), $v^*_{dc}$ is set to $v_{conv\,lowlimit}$.

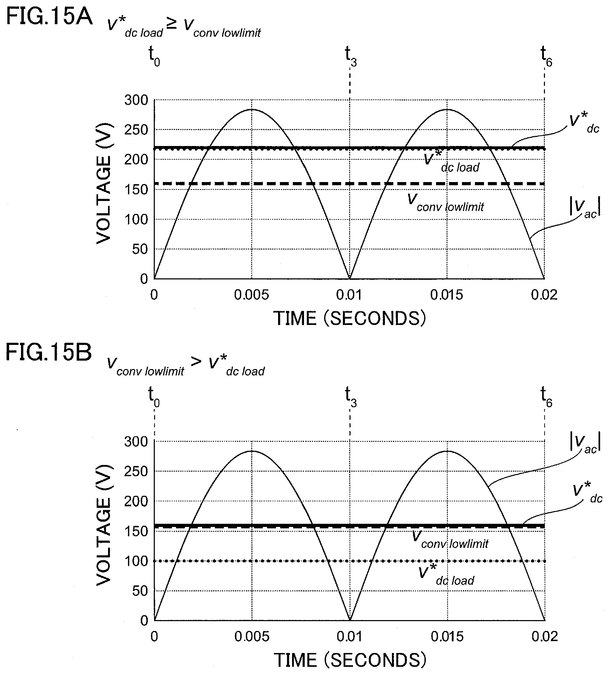

FIGS. 15A and 15B illustrate the DC link voltage target value $v^*_{dc}$ in an operation mode in which power is fed to the DC load 50 from the DC power source 40 during islanding operation. FIG. 15A illustrates a case where the DC link voltage target value $v^*_{dc\,load}$ based on the DC load 50 is greater than the lower limit value $v_{conv\,lowlimit}$ of the output voltage of the DC/DC converter 10, and FIG. 15B illustrates a case where the lower limit value $v_{conv\,lowlimit}$ of the output voltage of the DC/DC converter 10 is greater than the DC link voltage target value $v^*_{dc\,load}$ based on the DC load 50. The absolute value $|v_{ac}|$ of the AC voltage $v_{ac}$ is also shown as a reference.

As shown in FIG. 15A, when $v^*_{dc\,load}$ is greater than $v_{conv\,lowlimit}$ ($v^*_{dc\,load} \geq v_{conv\,lowlimit}$), $v^*_{dc}$ is set to $v^*_{dc\,load}$.

As shown in FIG. 15B, when $v_{conv\,lowlimit}$ is greater than $v^*_{dc}$ load ($v_{conv\,lowlimit} \geq v^*_{dc\,load}$), $v^*_{dc}$ is set to $v_{conv\,lowlimit}$.

[Second Embodiment]

A power conversion system 2 according to a second embodiment includes a load switch circuit 70 on lines connecting the DC load 50 to the DC link 20. The load switch circuit 70 is an example of the switch circuit.

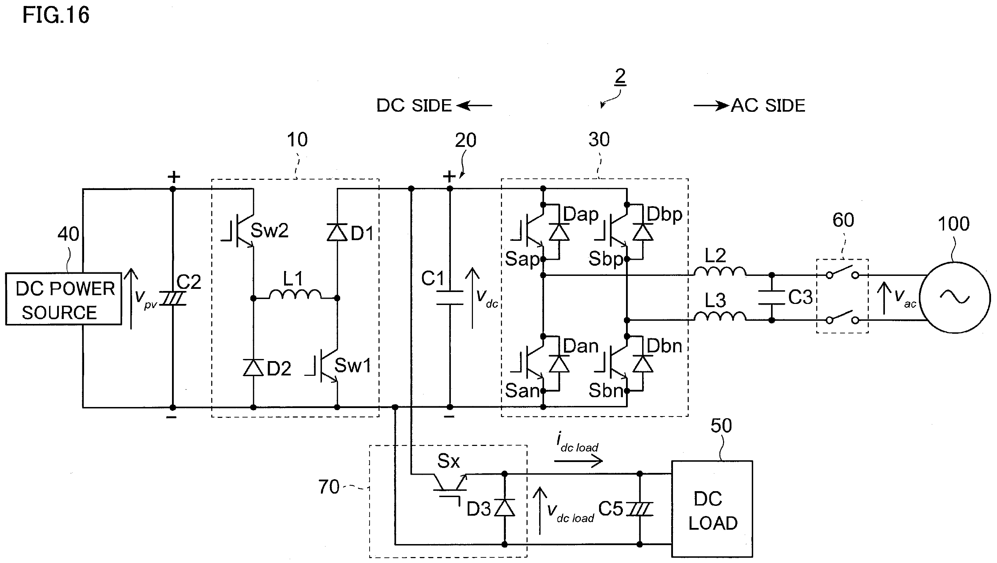

FIG. 16 illustrates an example power conversion system 2 according to the second embodiment. The power conversion system 2 includes the load switch circuit 70 in addition to the components of the power conversion system 1 shown in FIG. 1. The power conversion system 2 includes a capacitor C5, instead of the capacitor C4 provided in parallel with the DC load 50 in the power conversion system 1.

The load switch circuit 70 includes a load switch Sx and a diode D3. The load switch Sx is provided on one of the lines connecting the DC load 50 to the DC link 20 (in this case, the line connected to the positive side of the DC link 20). The diode D3 is connected in reverse bias between the pair of lines connecting the DC load 50 to the DC link 20. The load switch Sx may be similar to the above-described switching elements Sw1 and Sw2.

The load switch Sx is controlled by a separate controller to close (ON) during the period in which the DC link voltage $v_{dc}$ is near the DC link voltage target value $v^*_{dc\,load}$ based on the DC load 50, and to open (OFF) during the other periods. In other words, the load switch Sx is controlled to close (ON) during a period in which the DC link voltage $v_{dc}$ is within a predetermined voltage range defined in accordance with the DC load 50. Note that the load switch Sx may be closed (ON) during the period in which the DC link voltage $v_{dc}$ is within a predetermined voltage range defined in accordance with the DC load 50. During the period in which the load switch Sx is closed (ON), power is fed from the DC link 20 to the DC load 50. During the period in which the load switch Sx is open (OFF), power is fed from the capacitor C5 to the DC load 50. The diode D3 serves as a so-called freewheeling diode for the load switch Sx.

The capacitor C5 feeds power to the DC load 50 during the period in which the load switch Sx is open (OFF). Accordingly, the capacitor C5 is required to have a larger capacitance than the capacitor C4 in the power conversion system 1. It is preferable that the capacitor C5 be selected to have a larger capacitance than the capacitor C1 in the DC link 20. The selection of such a capacitor C5 facilitates adjustment of the DC link voltage $v_{dc}$ between the DC/DC converter 10 and the grid-connected inverter 30 and reduces fluctuations in the DC voltage $v_{dc\,load}$ supplied to the DC load 50. The capacitor C5 may be an electrolytic capacitor, a film capacitor, or the like.

(Operation Modes of the Power Conversion System 2)

Operation modes of the power conversion system 2 for feeding power to the DC load 50 during parallel operation with reverse power will be described.

FIGS. 17A to 17C illustrate the DC link voltage target value $v^*_{dc}$ as a function of the change in the DC link voltage target value $v^*_{dc\,load}$ based on the DC load 50. FIG. 17A illustrates a case where the DC link voltage target value $v^*_{dc\,load}$ based on the DC load 50 is smaller than the lower limit value $v_{conv\,lowlimit}$ of the output voltage of the DC/DC converter 10. FIG. 17B illustrates a case where the DC link voltage target value $v^*_{dc\,load}$ based on the DC load 50 is greater than the lower limit value $v_{conv\,lowlimit}$ of the output voltage of the DC/DC converter 10 but smaller than the absolute value $|v_{ac\,peak}|$ of the peak voltage of the AC voltage $v_{ac}$. FIG. 17C illustrates a case where the DC link voltage target value $v^*_{dc\,load}$ based on the DC load 50 is greater than the absolute value $|v_{ac\,peak}|$ of the peak voltage of the AC voltage $v_{ac}$. FIGS. 17A to 17C are similar to FIGS. 8A to 8C depicting the power conversion system 1, but instead of illustrating the operation of the grid-connected inverter 30, FIGS. 17A to 17C illustrate the ON (closed) and OFF (open) states of the load switch Sx.

The DC link voltage target value $v^*_{dc\,inv}$ based on the grid-connected inverter 30 is set equal to the absolute value $|v_{ac}|$ of the AC voltage $v_{ac}$ ($v^*_{dc\,inv} = |v_{ac}|$).

The DC load voltage $v_{dc\,load}$ applied to the DC load 50 is indicated by a dash-dotted line.

FIG. 17(A) illustrates a case where $v^*_{dc\,load}$ is smaller than $v_{conv\,lowlimit}$ ($v^*_{dc\,load} < v_{conv\,lowlimit}$). Times t1, t2, t4, and t5 are the time points at which $v^*_{dc\,inv}$ ($= |v_{ac}|$) intersects $v_{conv\,lowlimit}$.

During the period from time t0 to time t1, $v_{conv\,lowlimit}$ is greater than both $v^*_{dc\,load}$ and $v^*_{dc\,inv}$ ($= |v_{ac}|$). The target value $v^*_{dc}$ is set to $v_{conv\,lowlimit}$. The load switch Sx is controlled to close (ON). Thus, the DC load 50 is fed with power from the DC link 20, and the capacitor C5 is charged.

During the period from time t1 to time t2, $v^*_{dc\,inv}$ ($= |v_{ac}|$) is greater than both $v^*_{dc\,load}$ and $v_{conv\,lowlimit}$. The target value $v^*_{dc}$ is set to $v^*_{dc\,inv}$ ($= |v_{ac}|$). The load switch Sx is controlled to open (OFF). Thus, the DC load 50 is fed with power by the discharge of the capacitor C5.

During the period from time t2 to time t3, the situation is the same as during the period from time t0 to time t1, so that $v^*_{dc}$ is again set t0 $v_{conv\,lowlimit}$. The load switch Sx is controlled to close (OFF). Thus, the DC load 50 is fed with power from the DC link 20, and the capacitor C5 is charged.

If the voltage drop of the capacitor C5 due to its discharge during the period from time t1 to time t2 is disregarded, $v_{conv\,lowlimit}$ is applied to the DC load 50 during the period from time t0 to time t3, as indicated by the dashed line in FIG. 17A. In FIG. 8(A), $v^*_{dc\,inv}$ ($= |v_{ac}|$) is applied to the DC load 50 during the period from time t1 to time t3. The value of $v^*_{dc\,inv}$ ($= |v_{ac}|$) is greater than $v_{conv\,lowlimit}$. Controlling the load switch Sx to open (OFF) and close (ON) prevents excessive voltage from being applied to the DC load 50. As a result, the voltage $v_{dc}$ applied to the DC load 50 can be maintained at an appropriate level. This improves the operating efficiency of the DC load 50.

FIG. 17(b) illustrates a case where $v^*_{dc\,load}$ is greater than $v_{conv\,lowlimit}$ but smaller than $|v_{ac\,peak}|$. Times t1, t2, t4, and t5 are the time points at which $v^*_{dc\,inv}$ ($= |v_{ac}|$) intersects $v^*_{dc\,load}$.

During the period from time t0 to time t1, $v^*_{dc\,load}$ is greater than both $v_{conv\,lowlimit}$ and $v^*_{dv\,inv}$ ($= |v_{ac}|$). The target value $v^*_{dc}$ is set to $v^*_{dc\,load}$. The load switch Sx is controlled to close (ON). Thus, the DC load 50 is fed with power from the DC link 20, and the capacitor C5 is charged.

During the period from time t1 to time t2, $v^*_{dc\,inv}$ ($= |v_{ac}|$) is greater than both $v^*_{dc\,load}$ and $v_{conv\,lowlimit}$. The target value $v^*_{dc}$ is set to $v^*_{dc\,inv}$ ($= |v_{ac}|$). The load switch Sx is controlled to open (OFF). Thus, the DC load 50 is fed with power from the capacitor C5, causing the capacitor C5 to discharge.

During the period from time t2 to time t3, the situation is the same as during the period from time t0 to time t1, so that $v^*_{dc}$ is again set to $v^*_{dc\,load}$. The load switch Sx is controlled to close (ON). Thus, the DC load 50 is fed with power from the DC link 20, and the capacitor C5 is charged.

If the voltage drop of the capacitor C5 due to its discharge during the period from time t1 to time t2 is disregarded, $v^*_{dc\,load}$ is applied to the DC load 50 during the period from time t0 to time t3, as indicated by the dashed line in FIG. 17B. The DC load input voltage $v_{dc\,load}$ is always equal to $v^*_{dc\,load}$, which is suitable for the DC load 50. In FIG. 8B, during the period from time t1 to time t3, the DC load input voltage $v_{dc\,load}$ is equal to $v^*_{dc\,inv}$ ($= |v_{ac}|$), which is greater than $v^*_{dc\,load}$. Controlling the load switch Sx to open (OFF) and close (ON) prevents excessive voltage from being applied to the DC load 50. As a result, the voltage $v_{dc}$ applied to the DC load 50 can be maintained at an appropriate level. This improves the operating efficiency of the DC load 50.

FIG. 17(c) illustrates a case where $v^*_{dc\,load}$ is greater than $|v_{ac\,peak}|$.

During the period from time t0 to time t3, $v^*_{dc\,load}$ is greater than both $v_{conv\,lowlimit}$ and $v^*_{dc\,inv}$ ($= |v_{ac}|$). The target value $v^*_{dc}$ is set to $v^*_{dc\,load}$. The load switch Sx is controlled to close (ON). Thus, the DC load 50 is fed with power from the DC link 20.

The DC load input voltage $v_{dc\,load}$ of the DC load 50 is always equal to $v^*_{dc\,load}$, which is suitable for the DC load 50. As a result, the voltage $v_{dc}$ applied to the DC load 50 can be maintained at an appropriate level. This improves the operating efficiency of the DC load 50.

At times t2 and t5 in FIGS. 17A and 17B, the control for switching the load switch Sx from open (OFF) to closed (ON) may be performed while the DC link voltage $v_{dc}$ remains within the predetermined voltage range defined in accordance with the DC load 50. Note that, while the DC link voltage $v_{dc}$ remains within the predetermined voltage range, the load switch Sx may be maintained in the open (OFF) state, or it may be controlled to switch from closed (ON) to open (OFF).

Next, means for suppressing an inrush current that occurs when the load switch Sx is switched from open (OFF) to closed (ON) (i.e., inrush current suppression means) will be described.

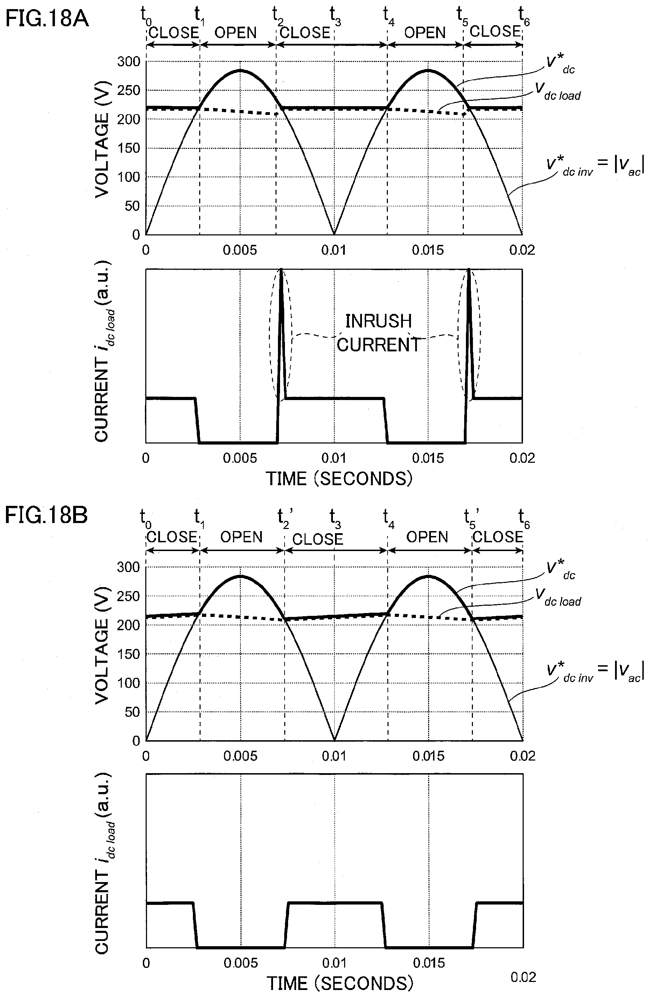

FIGS. 18A and 18B illustrate means for suppressing an inrush current caused by the load switch Sx. FIG. 18A illustrates a case where an inrush current occurs, and FIG. 18B illustrates a case where the inrush current is suppressed. In each of FIGS. 18A and 18B, the upper part shows voltage waveforms, and the lower part shows a current waveform. The current waveform shown in the lower part represents the waveform of the current $i_{dc\,load}$ flowing from the load switch Sx to the DC load 50. The vertical axis represents the current $i_{dc\,load}$ (a.u.). Times t1, t2, t4, t5, t2', and t5' are the time points at which the load switch Sx is switched between the open (OFF) and closed (ON) states.

While there is a voltage difference between the DC load input voltage $v_{dc\,load}$ and the DC link voltage $v_{dc}$ (i.e., in the state at times t2 and t5) as shown in FIG. 18A, switching the load switch Sx from open (OFF) to closed (ON) causes an inrush current to flow in the current $i_{dc\,load}$ from the load switch Sx to the DC load 50, due to the charging of the capacitor C5. The inrush current may cause an increase in circuit losses and a reduction in the service life of the capacitor C5.

As shown in FIG. 18B, by controlling the load switch Sx to switch from open (OFF) to closed (ON) while the voltage difference between the DC load input voltage $v_{dc\,load}$ and the DC link voltage $v_{dc}$ is within a predetermined voltage range (i.e., in the state at times t2' and t5'), the inrush current due to the charging of the capacitor C5 is suppressed. The voltage difference between the DC load input voltage $v_{dc\,load}$ and the DC link voltage $v_{dc}$ may be set in accordance with the allowable magnitude of inrush current.

As an alternative means for suppressing inrush current, the load switch Sx may be operated in a chopping mode, repeatedly alternating between the open (OFF) and closed (ON) states during the transition from the open (OFF) state to the closed (ON) state. The chopping operation may be performed with a predetermined chopping period set in advance, or alternatively, the chopping period may be determined based on the detection of the current flowing through the load switch Sx. The switching operation (turn-on operation) of the load switch Sx from the open (OFF) state to the closed (ON) state may also be delayed by, for example, increasing the value of the resistor connected to the control terminal of the load switch Sx. A small-capacity reactor may be inserted between the load switch Sx and the capacitor C5 to suppress sharp changes in current.

(Modification of the Power Conversion System 2 According to the Second Embodiment)

A power conversion system 3 as a modification of the power conversion system 2 will now be described.

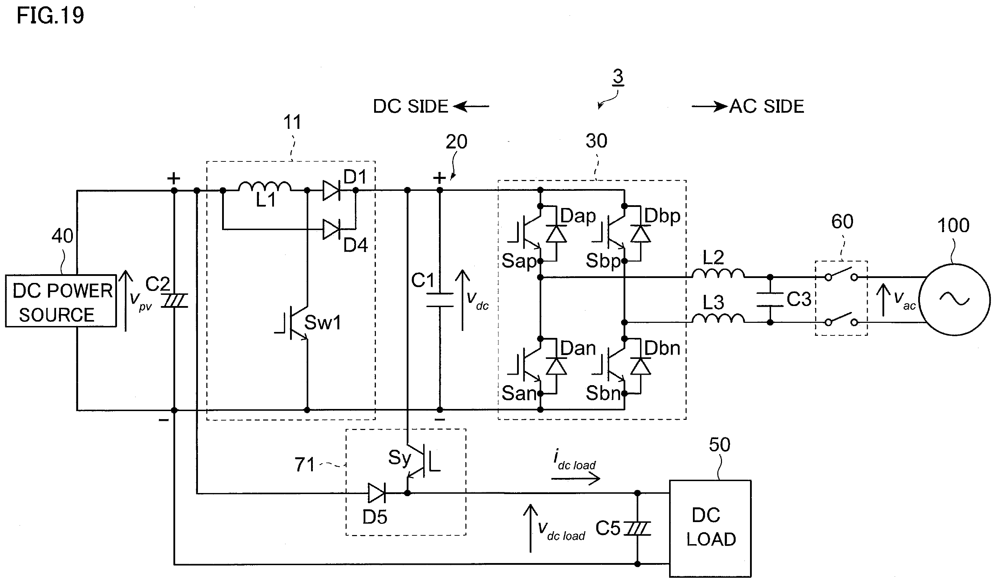

FIG. 19 illustrates an example power conversion system 3 as a modification of the power conversion system 2 according to the second embodiment. Components identical to those of the power conversion system 2 are designated by the same reference numerals, and detailed description thereof is omitted.

The power conversion system 3 includes a DC/DC converter 11, instead of the DC/DC converter 10 in the power conversion system 2. In the DC/DC converter 11, the switching element Sw2 and the diode D2 of the DC/DC converter 10 are omitted, and a diode D4 is provided instead. The power conversion system 3 includes a load switch circuit 71, instead of the load switch circuit 70 in the power conversion system 2. The load switch circuit 71 is another example of the switch circuit.

The diode D4 in the DC/DC converter 11 is provided in parallel with the series connection of the reactor L1 and the diode D1. The anode terminal of the diode D4 is connected to the terminal of the reactor L1 that is not connected to the diode D1, and the cathode terminal of the diode D4 is connected to the cathode terminal of the diode D1.

The load switch circuit 71 includes a load switch Sy and a diode D5. The anode terminal of the diode D5 is connected to the positive side of the DC power source 40. The load switch Sy is connected at its collector terminal to the positive side of the DC link 20, and at its emitter terminal to the cathode terminal of the diode D5. The DC load 50 is connected between the negative side of the DC power source 40 and the emitter terminal of the load switch Sy (i.e., the cathode terminal of the diode D5).

The DC/DC converter 11 is a boost circuit capable of directly outputting the input voltage as the output voltage when not performing a boosting operation. When performing a boosting operation, the switching element Sw1 is switched by a separate controller to make the DC link voltage $v_{dc}$ higher than the DC power source voltage $v_{pv}$. When not performing a boosting operation, the switching element Sw1 is turned off to stop the DC/DC converter 11. The diode D4 allows the output voltage of the DC power source 40 (i.e., the DC power source voltage $v_{pv}$) to be bypassed directly to the DC link 20. The diode D4 is a bypass diode. The diode D4 is in the OFF state during the boosting operation and switches to the ON state when the DC/DC converter is stopped.

The load switch Sy functions in the same manner as the load switch Sx in the load switch circuit 70. The load switch Sy is controlled to close (ON) during the period in which the DC link voltage $v_{dc}$ is near the DC link voltage target value $v^*_{dcload}$ based on the DC load 50, and to open (OFF) during the other periods. This prevents the DC load input voltage $v_{dcload}$ from becoming excessively high. When the DC load input voltage $v_{dcload}$ is to be set to the DC power source voltage $v_{pv}$, the load switch Sy is set to OFF. The diode D5 allows the output voltage of the DC power source 40 (i.e., the DC power source voltage $v_{pv}$) to be directly bypassed to the DC load 50. The diode D5 is a bypass diode. The diode D5 connects the DC load 50 and the DC power source 40.

The power conversion system 3 includes the bypass diodes D4 and D5. While the bypass diodes D4 and D5 are in the ON state, a current path with a smaller number of passive and active elements is formed, which reduces losses in the current path.

The inrush current suppression means described in relation to the power conversion system 2 may also be used in the power conversion system 3.

(Application to a Three-Phase AC Power Grid)

While the power grid 100 has been described as being a single-phase AC system in the first and second embodiments, the techniques of the present disclosure are also applicable to three-phase AC power grids.

In a three-phase AC power grid, grid voltages associated with the grid-connected inverter 30 are defined as AC voltages $v_u$, $v_v$, and $v_w$ (instantaneous values). The DC link voltage target value $v'_{dc\,inv}$ based on the grid-connected inverter 30 is determined in accordance with the AC voltages $v_u$, $v_v$, and $v_w$, as well as the operating state of the grid-connected inverter 30. For example, during parallel operation with the power grid, the DC link voltage target value $v^*_{dc\,inv}$ based on the grid-connected inverter 30 may be determined as the difference between the maximum value $\max(v_u, v_v, v_w)$ and the minimum value $\min(v_u, v_v, v_w)$ of the AC voltages $v_u$, $v_v$, and $v_w$ (i.e., $\max(v_u, v_v, v_w) - \min(v_u, v_v, v_w)$); in other words, it may be determined as the maximum of the absolute values of the (instantaneous) line-to-line voltages (i.e., $\max(|v_u - v_v|, |v_v - v_w|, |v_w - v_u|)$). For example, during parallel operation with the power grid with reverse power flow, the DC link voltage target value $v^*_{dc\,inv}$ based on the grid-connected inverter 30 may be determined as the maximum of the absolute values of the (instantaneous) line-to-line voltages plus a voltage margin $v_{margin}$ (i.e., $\max(|v_u - v_v|, |v_v - v_w|, |v_w - v_u|) + v_{margin}$).

In a three-phase AC power grid, the DC link voltage target value $v^*_{dcinv}$ based on the grid-connected inverter 30 is greater than or equal to $\sqrt{3}/2$ (approximately 0.86) times the peak line-to-line voltage. Accordingly, the voltage range in which the DC link voltage target value $v^*_{dc}$ equals the DC link voltage target value $v^*_{dcload}$ based on the DC load 50 (i.e., the voltage range where $v^*_{dc} = v^*_{dcload}$) is limited. On the other hand, in a single-phase AC power grid, the variation in the DC link voltage target value $v^*_{dcinv}$ based on the grid-connected inverter 30 is greater than that in a three-phase AC power grid. Accordingly, the voltage range in which the DC link voltage target value $v^*_{dc}$ equals the DC link voltage target value $v^*_{dcload}$ based on the DC load 50 (i.e., the voltage range where $v^*_{dc} = v^*_{dc\,load}$) is wider. A single-phase AC power grid is more suitable than a three-phase AC power grid.

(Advantages and Effects of the Embodiments)

The power conversion systems 1, 1A, 1B, 1C, 2, and 3 according to the present embodiments each include the DC/DC converter 10 configured to allow connection of the DC power source 40; the grid-connected inverter 30, and the DC link 20 configured to connect the DC/DC converter 10 and the grid-connected inverter 30. The voltage of the DC link 20 is adjusted within a half cycle of the AC-side grid voltage of the grid-connected inverter 30 in accordance with the DC load 50 connectable to the DC link 20. The voltage of the DC link 20 is adjusted in accordance with the DC load 50 connected to the DC link 20. This feature improves the operating efficiency of the DC load 50.

The voltage of the DC link 20 in the power conversion systems 1, 1A, 1B, 1C, 2, and 3 according to the present embodiments may be adjusted in accordance with the state of the DC load 50 connectable to the DC link 20. This feature enables an appropriate level of voltage to be applied to the DC load 50.

The DC link 20 in the power conversion systems 1, 1A, 1B, 1C, 2, and 3 according to the present embodiments may be configured to allow connection of, as the DC load 50, a DC load whose output varies depending on the voltage of the DC link 20. This feature enables the output of the DC load 50 to be maintained at an appropriate level.

The DC link 20 of the power conversion systems 1, 1A, 1B, 1C, 2, and 3 according to the present embodiments may be configured to allow connection of, as the DC load 50, a DC load including a power converter, where the voltage of the DC link 20 is adjusted in accordance with the power conversion state of the power converter. This feature enables an appropriate level of voltage to be applied to the DC load 50 including a power converter.

The DC link 20 of the power conversion systems 1, 1A, 1B, 1C, 2, and 3 according to the present embodiments may be configured to allow connection of, as the DC load 50, a DC load including the power converter that drives a rotating electrical machine at variable speed, where the voltage of the DC link 20 is adjusted in accordance with the operating state of the rotating electrical machine. This feature enables an appropriate level of voltage to be applied to the DC load 50 including the power converter that drives a rotating electrical machine at variable speed.

The adjustment of the voltage of the DC link 20 in the power conversion systems 1, 1A, 1B, 1C, 2, and 3 according to the present embodiments may be performed by control that includes, within a half cycle of the grid voltage, a period during which the voltage is adjusted in accordance with the DC load 50 connectable to the DC link 20, and a period during which the voltage is adjusted so as to correspond to a voltage based on the grid voltage. This feature helps prevent excessive voltage from being applied to the DC load 50.

The voltage based on the grid voltage in the power conversion systems 1, 1A, 1B, 1C, 2, and 3 according to the present embodiments may be a voltage greater than the absolute value of the grid voltage. This feature ensures that the voltage required by the grid-connected inverter 30 is secured, regardless of fluctuations in the voltage of the DC link 20.

The grid-connected inverter 30 in the power conversion systems 1, 1A, 1B, 1C, 2, and 3 according to the present embodiments may be controlled to perform one of PWM operation, PAM operation, and rectification operation, in accordance with the DC load 50 connectable to the DC link 20. This feature enables an appropriate level of voltage to be applied to the DC load 50 by controlling the grid-connected inverter 30.

The DC link 20 of the power conversion systems 1, 1A, 1B, 1C, 2, and 3 according to the present embodiments may be configured to allow connection of the DC load 50 via the load switch circuit 70 or 71. This feature helps prevent excessive voltage from being applied to the DC load 50.

In the power conversion systems 1, 1A, 1B, 1C, 2, and 3 according to the present embodiments, the capacitor C5 having a larger capacitance than the capacitor C1 provided in the DC link 20 may be provided on the input side of the DC load 50 and in parallel with the DC load 50. This feature facilitates control of the voltage of the DC link 20 and the voltage of the DC load 50.

The load switch circuits 70 and 71 of the power conversion systems 1, 1A, 1B, 1C, 2, and 3 according to the present embodiments may be controlled to be turned on while the voltage of the DC link 20 is within a predetermined voltage range defined in accordance with the DC load 50. This feature helps prevent excessive voltage from being applied to the DC load 50.

The load switch circuits 70 and 71 of the power conversion systems 1, 1A, 1B, 1C, 2, and 3 according to the present embodiments may be controlled to be turned on while the voltage of the DC link 20 is within a predetermined voltage range defined in accordance with the input voltage of the DC load 50. This feature helps prevent an excessive current from flowing when the load switch circuits 70 and 71 are turned on.

The DC/DC converter 10 of the power conversion systems 1, 1A, 1B, 1C, 2, and 3 according to the present embodiments may be configured to connect, via the diode D5, the DC power source 40 connectable to the DC/DC converter 10 and the DC load 50 connectable to the DC link 20. This feature reduces losses in the current path when the diode D5 is placed in the ON state.

The heat pump system according to the present embodiments includes the power conversion system 1, 1A, 1B, 1C, 2, or 3, and a heat pump device as the DC load 50. This feature eliminates the need for providing a separate DC/DC converter.

The photovoltaic power generation system according to the present embodiments includes the power conversion system 1, 1A, 1B, 1C, 2, or 3, and a photovoltaic cell as the DC power source 40. This feature enables the implementation of a power generation system that interconnects the photovoltaic cell with the power grid 100 while maintaining an appropriate level of voltage applied to the DC load 50, achieved with a simple circuit configuration.

While the exemplary embodiments have been described above, it will be understood that various modifications to the forms and details may be made without departing from the spirit and scope of the appended claims.

Reference Signs List

1, 1A, 1B, 1C, 2, 3 Power conversion system
10, 11 DC/DC converter (direct current/direct current converter)
20 DC link (direct current link)
30 Grid-connected inverter
40 DC power source (direct current power source)
50 DC load (direct current load)
60 Switch
100 Power grid
70, 71 Load switch circuit
C1, C2, C3, C4, C5 Capacitor
D1, D2, D3, D4, D5, Dap, Dan, Dbp, Dbp Diode
L1, L2, L3 Reactor
San, Sap, Sbn, Sbp, Sw1, Sw2 Switching element
Sx, Sy Load switch

**Claims**

1. A power conversion system comprising:

    a DC/DC converter configured to allow connection of a DC power source;
    a grid-connected inverter; and
    a DC link configured to connect the DC/DC converter and the grid-connected inverter,
    wherein, within a half-cycle of a grid voltage on the AC-side of the grid-connected inverter, a voltage of the DC link is adjusted in accordance with a DC load connectable to the DC link.

2. The power conversion system according to claim 1, wherein the voltage of the DC link is adjusted in accordance with a state of the DC load connectable to the DC link.

3. The power conversion system according to claim 2, wherein the DC link is configured to allow connection of, as the DC load, a DC load whose output varies depending on the voltage of the DC link.

4. The power conversion system according to claim 2, wherein the DC link is configured to allow connection of, as the DC load, a DC load including a power converter, the voltage of the DC link being adjusted in accordance with a power conversion state of the power converter.

5. The power conversion system according to claim 4, wherein the DC link is configured to allow connection of, as the DC load, a DC load including the power converter that drives a rotating electrical machine at variable speed, the voltage of the DC link being adjusted in accordance with an operating state of the rotating electrical machine.

6. The power conversion system according to any one of claims 1 to 5, wherein the adjustment of the voltage of the DC link is performed by control that includes, within a half cycle of the grid voltage, a period during which the voltage is adjusted in accordance with the DC load connectable to the DC link, and a period during which the voltage is adjusted so as to correspond to a voltage based on the grid voltage.

7. The power conversion system according to claim 6, wherein the voltage based on the grid voltage is greater than an absolute value of the grid voltage.

8. The power conversion system according to any one of claims 1 to 7, wherein the grid-connected inverter is controlled to perform one of PWM operation, PAM operation, and rectification operation in accordance with the DC load connectable to the DC link.

9. The power conversion system according to claim 1, wherein the DC link is configured to allow connection of the DC load via a switch circuit.

10. The power conversion system according to claim 9, wherein a capacitor having a larger capacitance than a capacitor provided in the DC link is provided on an input side of the DC load and in parallel with the DC load.

11. The power conversion system according to claim 9 or 10, wherein the switch circuit is controlled to be turned on while the voltage of the DC link is within a predetermined voltage range defined in accordance with the DC load.

12. The power conversion system according to any one of claims 9 to 11, wherein the switch circuit is controlled to be turned on while the voltage of the DC link is within a predetermined voltage range defined in accordance with an input voltage of the DC load.

13. The power conversion system according to any one of claims 9 to 12, wherein the DC/DC converter is configured to connect, via a diode, the DC power source connectable to the DC/DC converter and the DC load connectable to the DC link.

14. A heat pump system comprising:

the power conversion system according to any one of claims 1 to 13; and
a heat pump device as the DC load.

15. A photovoltaic power generation system comprising:

the power conversion system according to any one of claims 1 to 13; and
a photovoltaic cell as the DC power source.

FIG.1

100

$i_{ac}$  $v_{ac}$

AC SIDE

60

C3

L2 L3

1

Dbp Sbp

30

Dap Sap   Dan San

Dbn Sbn

50

DC LOAD

$v_{dc}$

DC SIDE

20

C1

C4

D1 Sw1

10

Sw2 L1 D2

C2

$v_{pv}$

DC POWER SOURCE

40

## FIG.2A

$V_{dc} = 330V$

TOTAL CURRENT DISTORTION RATE
= 3.0 %

## FIG.2B

$V_{dc} = 270V$

TOTAL CURRENT DISTORTION RATE
= 25.3 %

## FIG.2C

$V_{dc} > V_{ac}$

TOTAL CURRENT DISTORTION RATE
= 3.0 %

EP 4 753 132 A1

FIG.3

1A

100

$v_{ac}$

60

30 — GRID-CONNECTED INVERTER

20

50 — DC LOAD

10-1 — DC/DC CONVERTER

10-2 — DC/DC CONVERTER

10-3 — DC/DC CONVERTER

10-N — DC/DC CONVERTER

40-1 — DC POWER SOURCE

40-2 — DC POWER SOURCE

40-2 — DC POWER SOURCE

40-N — DC POWER SOURCE

FIG.4

FIG.5

# FIG.6

| CONNECTION STATE WITH POWER GRID | OPERATING MODE OF GRID-CONNECTED INVERTER | PRECONDITIONS |
|---|---|---|
| PARALLEL OPERATION W/ REVERSE POWER FLOW | PAM OPERATION (SWITCHING OCCURS NEAR THE ZERO-CROSSING POINT OF $V_{ac}$ OR DURING OPERATION MODE SWITCHING ; OTHERWISE, THE SWITCHED STATE IS MAINTAINED.) | $v^{*}_{dc}=v^{*}_{dc\,inv}$, AND $|(v_{dc}-|v_{ac}|)|\leq \Delta v_{ac}$<br>$* \Delta v_{ac}$ :ALLOWABLE VOLTAGE DIFFERENCE BETWEEN THE OUTPUT VOLTAGE OF THE GRID-CONNECTED INVERTER AND THE GRID VOLTAGE DURING REVERSE POWER FLOW |
| | PWM OPERATION (REPEATED SWITCHING OPERATION) | |
| PARALLEL OPERATION W/ FORWARD POWER FLOW | FULL-WAVE RECTIFICATION OPERATION (SWITCHING STATE OFF, OR SYNCHRONOUS RECTIFICATION) | |
| | PWM RECTIFICATION OPERATION (PRIORITY ON FORWARD POWER FLOW QUALITY OR ON DC LINK VOLTAGE) | |
| ISLANDING OPERATION | STOPPED (SWITCHING STATE OFF) | |

EP 4 753 132 A1

FIG.7

| CONDITIONS | $v^*_{dc\,load} \geq v^*_{dc\,inv}$ 、AND $v^*_{dc\,load} \geq V_{conv\,lowlimit}$ | $v^*_{dc\,inv} \geq v^*_{dc\,load}$ 、AND $v^*_{dc\,inv} \geq V_{conv\,lowlimit}$ | $V_{conv\,lowlimit} \geq v^*_{dc\,load}$ 、AND $V_{conv\,lowlimit} \geq v^*_{dc\,inv}$ |
|---|---|---|---|
| DC/DC CONVERTER | OUTPUT VOLTAGE-BASED CONTROL MODE $v^*_{dc} = v^*_{dc\,load}$ | OUTPUT VOLTAGE-BASED CONTROL MODE $v^*_{dc} = v^*_{dc\,inv}$ | OUTPUT VOLTAGE-BASED CONTROL MODE $v^*_{dc} = V_{conv\,lowlimit}$ |
| GRID-CONNECTED INVERTER | PWM OPERATION | PAM OPERATION OR PWM OPERATION | PWM OPERATION |

EP 4 753 132 A1

**FIG.8A** $v^*_{dc\,load} < v_{conv\,lowlimit}$

**FIG.8B** $v_{conv\,lowlimit} \leq v^*_{dc\,load} \leq |v_{ac\,peak}|$

**FIG.8C** $v^*_{dc\,load} > |v_{ac\,peak}|$

**FIG.9A** $v^*_{dc\,load} < v_{conv\,lowlimit}$

$|v_{ac}|$    $v^*_{dc\,inv} = |v_{ac}| + v_{margin}$

**FIG.9B** $v_{conv\,lowlimit} \le v^*_{dc\,load} \le |v_{ac\,peak}| + v_{margin}$

$|v_{ac}|$    $v^*_{dc\,inv} = |v_{ac}| + v_{margin}$

**FIG.9C** $v^*_{dc\,load} > |v_{ac\,peak}| + v_{margin}$

$|v_{ac}|$    $v^*_{dc\,inv} = |v_{ac}| + v_{margin}$

FIG.10

| CONDITIONS | $v^*_{dc\,inv} \geq v^*_{dc\,load}$、AND $v^*_{dc\,inv} \geq V_{conv\,lowlimit}$ | $V_{conv\,lowlimit} \geq v^*_{dc\,load}$、AND $V_{conv\,lowlimit} \geq v^*_{dc\,inv}$ |
|---|---|---|
| DC/DC CONVERTER | OUTPUT VOLTAGE-BASED CONTROL MODE $v^*_{dc} = v^*_{dc\,inv}$ | OUTPUT VOLTAGE-BASED CONTROL MODE $v^*_{dc} = V_{conv\,lowlimit}$ |
| GRID-CONNECTED INVERTER | PAM OPERATION | PWM OPERATION |

EP 4 753 132 A1

FIG.11

FIG.12

| CONDITIONS | NONE |
|---|---|
| DC/DC CONVERTER | OUTPUT CURRENT-BASED CONTROL MODE |
| GRID-CONNECTED INVERTER | FULL-WAVE RECTIFICATION OPERATION OR PWM RECTIFICATION OPERATION |

EP 4 753 132 A1

FIG.13

| CONDITIONS | NONE |
|---|---|
| DC/DC CONVERTER | STOPPED |
| GRID-CONNECTED INVERTER | FULL-WAVE RECTIFICATION OPERATION OR PWM RECTIFICATION OPERATION |

EP 4 753 132 A1

FIG.14

EP 4 753 132 A1

| CONDITIONS | $v^*_{dc\,load} \geq v_{conv\,lowlimit}$ | $v_{conv\,lowlimit} > v^*_{dc\,load}$ |
|---|---|---|
| DC/DC CONVERTER | OUTPUT VOLTAGE-BASED CONTROL MODE $v^*_{dc} = v^*_{dc\,load}$ | OUTPUT VOLTAGE-BASED CONTROL MODE $v^*_{dc} = v_{conv\,lowlimit}$ |
| GRID-CONNECTED INVERTER | STOPPED | STOPPED |

FIG.15A $v^*_{dc\ load} \geq v_{conv\ lowlimit}$

FIG.15B $v_{conv\ lowlimit} > v^*_{dc\ load}$

EP 4 753 132 A1

FIG.16

FIG.17A $v^*_{dc\,load} < v_{conv\,lowlimit}$

FIG.17B $v_{conv\,lowlimit} \le v^*_{dc\,load} \le |v_{ac\,peak}|$

FIG.17C $v^*_{dc\,load} > |v_{ac\,peak}|$

**FIG.18A**

**FIG.18B**

FIG.19

EP 4 753 132 A1

## INTERNATIONAL SEARCH REPORT

<table>
<tr><td colspan="2">International application No.<br><br>**PCT/JP2024/018477**</td></tr>
</table>

**A.    CLASSIFICATION OF SUBJECT MATTER**

*H02M 3/155*(2006.01)i; *H02M 7/48*(2007.01)i
FI:   H02M3/155 H; H02M7/48 R

According to International Patent Classification (IPC) or to both national classification and IPC

**B.    FIELDS SEARCHED**

Minimum documentation searched (classification system followed by classification symbols)

H02M3/155; H02M7/48

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2011/099280 A1 (PANASONIC CORPORATION) 18 August 2011 (2011-08-18)<br>entire text, all drawings | 1-15 |
| A | JP 2004-357390 A (EBARA DENSAN LTD.) 16 December 2004 (2004-12-16)<br>entire text, all drawings | 1-15 |
| A | JP 2017-220996 A (TABUCHI DENKI K.K.) 14 December 2017 (2017-12-14)<br>entire text, all drawings | 1-15 |

☐ Further documents are listed in the continuation of Box C.          ☑ See patent family annex.

| | |
|---|---|
| \*  Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 July 2024** | **16 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/018477**

| Patent document cited in search report | | | Publication date (day/month/year) | Patent family member(s) | | | Publication date (day/month/year) |
|---|---|---|---|---|---|---|---|
| WO | 2011/099280 | A1 | 18 August 2011 | US 2013/0108938 A1 entire text, all drawings EP 2482419 A1 | | | |
| JP | 2004-357390 | A | 16 December 2004 | (Family: none) | | | |
| JP | 2017-220996 | A | 14 December 2017 | (Family: none) | | | |

Form PCT/ISA/210 (patent family annex) (July 2022)

**REFERENCES CITED IN THE DESCRIPTION**

**Patent documents cited in the description**

- WO 2011099280 A1